(19) Europäisches Patentamt / European Patent Office / Office européen des brevets

(11) **EP 2 732 430 B1**

(12) **EUROPÄISCHE PATENTSCHRIFT**

(45) Veröffentlichungstag und Bekanntmachung des Hinweises auf die Patenterteilung:
**19.09.2018   Patentblatt 2018/38**

(21) Anmeldenummer: **12724869.8**

(22) Anmeldetag: **21.04.2012**

(51) Int Cl.:
***G06T 5/00*** (2006.01)

(86) Internationale Anmeldenummer:
**PCT/DE2012/000425**

(87) Internationale Veröffentlichungsnummer:
**WO 2013/007226 (17.01.2013 Gazette 2013/03)**

(54) **BESTIMMUNG DER ÜBERTRAGUNGSFUNKTION EINES SIGNALVERARBEITENDEN SYSTEMS OHNE BEKANNTES EINGANGSSIGNAL**

DETERMINATION OF THE TRANSFER FUNCTION OF A SIGNAL-PROCESSING SYSTEM WITHOUT A KNOWN INPUT SIGNAL

DÉTERMINATION DE LA FONCTION DE TRANSFERT D'UN SYSTÈME DE TRAITEMENT DE SIGNAUX EN ABSENCE DE SIGNAL D'ENTRÉE CONNU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2011   DE 102011107371**

(43) Veröffentlichungstag der Anmeldung:
**21.05.2014   Patentblatt 2014/21**

(73) Patentinhaber: **Forschungszentrum Jülich GmbH 52425 Jülich (DE)**

(72) Erfinder: **THUST, Andreas 50939 Köln (DE)**

(56) Entgegenhaltungen:
**WO-A1-2010/038411      DE-A1-102006 038 211**

- **Frederick Nicolls: "The Development of a Predictive Autofocus Algorithm using a General Image Formation Model", Thesis, Master of Science in Engineering, 1. November 1995 (1995-11-01), Seiten 1-133, XP055035829, Gefunden im Internet: URL:http://www.dip.ee.uct.ac.za/publicatio ns/theses/MScFred.pdf [gefunden am 2012-08-20]**
- **Mauricio Delbracio ET AL: "Accurate Subpixel Point Spread Function Estimation from scaled image pairs", hal-00624757, version 2, 22. Februar 2012 (2012-02-22), Seiten 1-32, XP055035832, oai:hal.archives-ouvertes.fr:hal-00624757 Gefunden im Internet: URL:http://hal.archives-ouvertes.fr/hal-00 624757 [gefunden am 2012-08-20]**
- **R A Schowengerdt ET AL: "DETERMINATION OF THE INFLIGHT OTF OF ORBITAL EARTH RESOURCES SENSORS", , 1 October 1972 (1972-10-01), pages 1-23, XP055152956, Retrieved from the Internet: URL:https://ia600509.us.archive.org/15/ite ms/nasa_techdoc_19730002580/19730002580.p d f [retrieved on 2014-11-13]**

## Beschreibung

Die Erfindung betrifft Verfahren zur Bestimmung der Übertragungsfunktion eines signalverarbeitenden Systems, die kein bekanntes Eingangssignal voraussetzen.

### Stand der Technik

Signalverarbeitungssysteme, insbesondere Verstärker und optische Abbildungssysteme, arbeiten im Allgemeinen nicht linear und fehlerfrei. Das in einem Raum mit beliebigen Koordinaten $\mathbf{x}$ dargestellte Ausgangssignal $I(\mathbf{x})$ ist in der Regel die Faltung des Eingangssignals $O(\mathbf{x})$ mit der Übertragungsfunktion $T(\mathbf{x})$ des Systems:

$$I(\mathbf{x})=O(\mathbf{x})\otimes T(\mathbf{x}) \qquad\qquad (1),$$

wobei der Operator $\otimes$ für die Faltung steht. Die Übertragungsfunktion $T(\mathbf{x})$ ist von größter technischer Bedeutung für die Nutzung des signalverarbeitenden Systems. Ist diese Funktion bekannt, so kann aus $I(\mathbf{x})$ durch Entfaltung auf das Eingangssignal $O(\mathbf{x})$ und somit auf diejenige physikalische Messgröße zurückgeschlossen werden, die in $I(\mathbf{x})$ steckt. Bei Bildgebungssystemen wird $T(\mathbf{x})$ auch Punktantwortfunktion, englisch "point spread function", genannt. Kenntnis der Übertragungsfunktion $T(\mathbf{x})$ verbessert damit das Funktionieren des ganzen Systems. Ein prominentes Beispiel hierfür ist das Hubble-Teleskop, dessen Übertragungsfunktion neben den unvermeidlichen optischen Aberrationen zusätzlich noch die Auswirkungen eines systematischen Linsenfehlers enthielt. Indem diese Übertragungsfunktion erschlossen wurde, konnten nicht nur die zunächst völlig unbrauchbaren mit dem Teleskop aufgenommenen Bilder korrigiert werden, sondern auch Rückschlüsse auf Art und Stärke des Linsenfehlers gezogen werden. Dies ermöglichte eine nachträgliche optische Korrektur am Teleskop selbst. Um an die Übertragungsfunktion $T(\mathbf{x})$ zu gelangen, wird das System in der Regel mit einem bekannten Eingangssignal $O(\mathbf{x})$ beaufschlagt und dieses mit dem Ausgangssignal $I(\mathbf{x})$ verglichen. Bei Teleskopen wird häufig ein entfernter Stern als Objekt abgebildet, der als ideale Punktquelle mathematisch durch eine Delta-Funktion beschreibbar ist. Bei Photoapparaten werden als bekannte Objekte häufig beleuchtete Lochblenden, Schlitzblenden, oder Streifenmuster mit variablem Streifenabstand als Testobjekte herangezogen. Rauschen konnte in dem Maße als Eingangssignal $O(\mathbf{x})$ verwendet werden, wie ein mittlerer Funktionsverlauf bekannt war.

Für die Kameras von Elektronenmikroskopen behilft man sich mit scharfen Kanten als Teststrukturen (R. R. Meyer, A. Kirkland, "The effects of electron and photon scattering on signal and noise transfer properties of scintillators in CCD cameras used for electron detection", Ultramicroscopy 75, 23-33 (1998); R. R. Meyer, A. I. Kirkland, "Characterisation of the Signal and Noise Transfer of CCD Cameras for Electron Detection", Microscopy Research and Technique 49, 269-280 (2000); R. R. Meyer, A. I. Kirkland, R. E. Dunin-Borkowski, J. L. Hutchison, "Experimental characterisation of CCD cameras for HREM at 300 kV", Ultramicroscopy 85, 9-13 (2000)) sowie mit durch Elektronen erzeugtem Rauschen, dessen Ensemblemittelwert bekannt ist (J. M. Zuo, "Electron Detection Characteristics of a Slow-Scan CCD Camera, Imaging Plates and Film, and Electron Image Restoration", Microscopy Research and Technique 49, 245-268 (2000); K. Du, K. von Hochmeister, F. Philipp, "Quantitative comparison of image contrast and pattern between experimental and simulated highresolution transmission electron micrographs", Ultramicroscopy 107, 281-292 (2007)).

Nachteilig versagt diese Methode, wenn kein bekanntes Testobjekt und damit kein bekanntes Eingangssignal $O(x)$ zur Verfügung steht.

### Aufgabe und Lösung

Es ist daher die Aufgabe der Erfindung, ein Verfahren zur Bestimmung der Übertragungsfunktion eines signalverarbeitenden Systems zur Verfügung zu stellen, das ohne Kenntnis des Testobjekts, und damit ohne Kenntnis des Eingangssignals $O(\mathbf{x})$, auskommt.

Diese Aufgabe wird erfindungsgemäß gelöst durch Verfahren gemäß Haupt- und Nebenansprüchen. Weitere Ausgestaltungen ergeben sich jeweils aus den darauf rückbezogenen Unteransprüchen.

### Gegenstand der Erfindung

Im Rahmen der Erfindung wurde ein Verfahren zur Bestimmung der Übertragungsfunktion eines signalverarbeitenden Systems aus mindestens zwei Repräsentationen $I_1(\mathbf{x})$ und $I_2(\mathbf{x})$ eines Objekts, die das System aus unterschiedlich skalierten vom Objekt herrührenden Eingangssignalen erzeugt hat, oder aus einer Repräsentation $I_1(\mathbf{x})$ eines ersten Objekts und aus einer Repräsentation $I_2(\mathbf{x})$ eines hierzu bis auf einen Skalierfaktor geometrisch identischen Objekts entwickelt.

Die Koordinaten x, in denen die Repräsentationen dargestellt sind, können beispielsweise Orts- und/oder Zeitkoordinaten sein. Es kann aber auch beispielsweise die Energie eine der Koordinaten x sein, etwa bei der Energieverlustspektroskopie (electron energy loss spectroscopy, EELS), bei der ein Energieverlustspektrum auf eine CCD-Kamera geworfen wird. In den meisten Fällen können die Energie oder andere Koordinaten bei der Erzeugung der Repräsentationen $I_1(\mathbf{x})$ und $I_2(\mathbf{x})$ auf Orts- und Zeitkoordinaten zurückgeführt werden. So wird etwa bei EELS die Energieabhängigkeit in der Apparatur in Ortskoordinaten auf dem CCD-Chip der Kamera umgewandelt. Sofern im Folgenden von orts- und/oder zeitabhängigen Signalen die Rede ist, stehen diese Koordinaten somit ohne Einschränkung der Allgemeinheit auch stellvertretend für andere Koordinaten, die sich auf Ort und/oder Zeit zurückführen lassen.

Ein Objekt im Sinne dieser Erfindung vermag durch seine Anwesenheit eine physikalische Messgröße orts- und/oder zeitabhängig zu verändern und hierdurch ein Eingangssignal für das signalverarbeitende System zu erzeugen. Beispielsweise verändert eine Schallquelle die Schallintensität im Raum orts- und zeitabhängig. Ein photographierbares Objekt verändert die Lichtintensität im Raum. Die Schall- bzw. Lichtintensität ist jeweils das Eingangssignal $O(\mathbf{x})$, das für signalverarbeitende Systeme bereitgestellt wird. Das Objekt selbst muss nicht bekannt sein.

Trifft das Eingangssignal auf ein signal verarbeitendes System, das auf diese Art von Signal sensitiv ist, so liefert dieses an seinem Ausgang $I(\mathbf{x})$ gemäß Gl. (1). $I(\mathbf{x})$ ist eine Repräsentation des Objekts, das das Eingangssignal $O(\mathbf{x})$ ausgesendet hat, erhalten unter den Aufnahme- bzw. Abbildungsbedingungen, die in $T(\mathbf{x})$ verkörpert sind.

Aus ein und demselben Objekt können unterschiedlich skalierte Repräsentationen erzeugt werden. Die Skalierung entspricht der räumlichen oder zeitlichen Abtastrate, mit der das Signal erfasst wird. Bei einer Tonaufnahme auf einem analogen Band hängt beispielsweise die zeitliche Abtastrate davon ab, wie schnell das Band läuft. Bei einer digitalen Tonaufnahme wird eine Abtastrate vorgegeben und entscheidet maßgeblich darüber, um wie viel sich die Datei pro Minute Aufnahme vergrößert. An einer Kamera entscheidet die Einstellung des Objektivs auf Tele oder Weitwinkel darüber, welcher räumliche Bildausschnitt auf die feste Anzahl Pixel des Bildsensors projiziert wird, und damit über die räumliche Abtastrate. Gleiches gilt beim Mikroskop, dessen räumliche Abtastrate von der eingestellten Vergrößerungsstufe abhängt.

Zwei unterschiedlich skalierte Repräsentationen mit gleicher Wirkung liegen auch dann vor, wenn mit dem System eine Repräsentation $I_1(\mathbf{x})$ eines ersten Objekts und eine Repräsentation $I_2(\mathbf{x})$ eines hierzu bis auf einen Skalenfaktor geometrisch identischen Objekts angefertigt worden sind. Ein Beispiel hierfür ist das Abphotographieren zweier unterschiedlich vergrößerter und hinreichend scharfer Ausdrucke desselben Motivs mittels eines Photoapparates unter identischen Abbildungsbedingungen.

Erfindungsgemäß werden die beiden Repräsentationen $I_1(\mathbf{x})$ und $I_2(\mathbf{x})$ zunächst in einen Arbeitsraum (mit Koordinaten $\mathbf{g}$) transformiert, in dem sie jeweils als Produkt

$$I(\mathbf{g})=O(\mathbf{g})T(\mathbf{g}) \qquad\qquad (2)$$

der Übertragungsfunktion mit dem unbekannten Eingangssignal darstellbar sind. Dieser Arbeitsraum kann beispielsweise der Frequenzraum sein, und um eine Repräsentation in ihn zu überführen, kann sie insbesondere fouriertransformiert werden. Die Transformation hat zum Ziel, durch die Umwandlung der Faltung in ein Produkt gemäß Gl. (2) das weitere Rechnen mit den Repräsentationen zu vereinfachen.

Die Darstellung der Repräsentation im Frequenzraum bezeichnet man auch als Spektrum. In diesem Raum ist die Übertragungsfunktion $T(\mathbf{g})$ die Entsprechung der Punktantwortfunktion und wird Modulationstransferfunktion genannt.

Es gibt Sonderfälle, in denen die Objekte nicht bis auf einen Skalenfaktor geometrisch identisch sein müssen, sondern es ausreicht, wenn sie geometrisch ähnlich sind. Das bedeutet, dass dann Drehungen und/oder Spiegelungen des einen Objekts gegenüber dem anderen keinen zusätzlichen Unterschied zwischen den Repräsentationen $I_1(\mathbf{x})$ und $I_2(\mathbf{x})$ bewirken.

Beispielsweise kann die Übertragungsfunktion $T(\mathbf{x})$ oder ihr Pendant $T(\mathbf{g})$ im Arbeitsraum eine Symmetrie, insbesondere eine Rotationssymmetrie, aufweisen. Dann können auch Repräsentationen zweier gegeneinander gedrehter oder gespiegelter Eingangssignale $O_1$ und $O_2$ im Realraum (Koordinaten $\mathbf{x}$) oder im Arbeitsraum (Koordinaten $\mathbf{g}$) zur Deckung gebracht werden.

In diesem Zusammenhang ist noch ein weiteres vereinfachendes Szenario zu erörtern: Wenn eine ausreichend hohe Anzahl gedrehter und gespiegelter Varianten im Bild vorhanden sind (z.B. Hunderte oder Tausende Bakterien oder Hunderte oder Tausende Nanocluster von Atomen im Elektronenmikroskop), kann jegliche azimuthale Präferenz des Objekts von Natur aus verschwinden. In diesem Falle sind trotz gedrehter und gespiegelter Einzelobjekte (Einzelbakterium, Einzelcluster) innerhalb der Ensembles die jeweiligen Ensemblemittelwerte bis auf einen Vergrößerungsfaktor wieder identisch. In diesem Falle muss dann noch nicht einmal dasselbe Gebiet in den beiden Bildern enthalten sein (identisches Bakterium, bzw. genau dieser selbe Atomcluster), sondern es reicht sogar, wenn ein repräsentativer Ensemblemittelwert aus zwei verschiedenen Aufnahmeorten ermittelt wird.

Letzteres Prinzip macht man sich auch bei der Nutzung von unbekanntem Rauschen als Eingangssignal zunutze, da niemals identisches Rauschen bei zwei hintereinanderfolgenden Aufnahmen erfasst werden kann. Jedoch kann man davon ausgehen, dass die entsprechenden Ensemblemittelwerte der bei beiden Aufnahmen erhaltenen Eingangssignale O($\mathbf{x}$) identisch sind.

Es werden Ausschnitte der beiden Repräsentationen $I_1(\mathbf{x})$ und $I_2(\mathbf{x})$, die sich auf auf den gleichen Bereich bzw. gleichwertige Bereiche des Objekts bzw. der Objekte beziehen und somit auf das gleiche unbekannte Eingangssignal zurückgehen, ausgewählt und im Arbeitsraum als Funktionen $I_1(\mathbf{g})$ und $I_2(\mathbf{g})$ ausgedrückt. Insbesondere kann eine der Repräsentationen zur Gänze als Ausschnitt verwendet werden und aus der zweiten Repräsentation derjenige Ausschnitt, der den gleichen Objektinhalt wiedergibt wie die erste Repräsentation. Die Ausschnitte können bereits vor der Transformation in den Arbeitsraum ausgewählt werden. Eine Auswahl nach der Transformation in den Arbeitsraum ist in Sonderfällen möglich, aber deutlich schwieriger.

Um die Ausschnitte zu identifizieren, wird ein Ähnlichkeitsmaß, wie etwa die Kreuzkorrelation, optimiert, wobei Position und Ausdehnung des Ausschnitts aus der zweiten Repräsentation die freien Parameter sind. Sind die Koordinaten $\mathbf{x}$ im Realraum diskret, können beispielsweise alle möglichen Werte durchprobiert und das Maximum des Ähnlichkeitsmaßes bestimmt werden.

Das Verfahren versagt nicht schlagartig, wenn der Ausschnitt aus der zweiten Repräsentation nicht exakt den gleichen Objektinhalt wiedergibt wie die erste Repräsentation. Vielmehr wird die Bestimmung der Übertragungsfunktion dann progressiv ungenauer. Der Auswahlfehler bewirkt, dass sich die durch beide Repräsentationen wiedergegebenen Objektinhalte in einem Teilgebiet nicht überlappen. Der entsprechende relative Fehler ergibt sich aus dem Verhältnis der nicht überlappenden Fläche zur Gesamtfläche der ersten Repräsentation. In erster Näherung kann dieser relative Fehler auch im Arbeitsraum, beispielsweise im Frequenzraum, angenommen werden.

Werden beispielsweise in diskrete Pixel unterteilte Bilder als Repräsentationen gewählt, entsteht beim Übereinanderlegen mittels Durchprobieren für jede der beiden Dimensionen ein Fehler von maximal einem halben Pixel. Wird der gleiche Fehler für die Ausdehnung (Vergrößerung) angenommen, ergibt sich ein maximaler Gesamtfehler von einem Pixel je Dimension. Sind die Bilder quadratisch mit einer Kantenlänge von N Pixeln, entspricht der relative Fehler dem Verhältnis der Pixelanzahl 2*N in den überstehenden, nicht überlappenden Streifen zur Gesamtzahl N*N aller Pixel, also 2*N/(N*N)=2/N. Bei typischen Bildkantenlängen der Größenordnung N=1024 Pixeln liegt der relative Fehler gemäß dieser Abschätzung somit im unteren Promillebereich.

Der Begriff des "gleichen Bereichs", auf den sich die beiden Repräsentationen beziehen, ist nicht rein geometrisch zu sehen. Vielmehr umfasst er auch gleichwertige Bereiche in dem Sinne, dass die Unterschiede zwischen diesen Bereichen keinen signifikanten Unterschied zwischen den Repräsentationen $I_1(\mathbf{x})$ und $I_2(\mathbf{x})$ bewirken. Dies ist insbesondere dann der Fall, wenn das Eingangssignal O($\mathbf{x}$) ein Ensemblemittelwert über sehr viele statistisch verteilte Einzelbeiträge ist, beispielsweise die Lichtintensität, die von Hunderten einzelner Bakterien emittiert wird. Analog ist der Begriff der "gleichwertigen Bereiche" auszulegen, wenn $I_1(\mathbf{x})$ und $I_2(\mathbf{x})$ nicht Repräsentationen desselben Objekts sind, sondern $I_1(\mathbf{x})$ die Repräsentation eines ersten Objekts und $I_2(\mathbf{x})$ die Repräsentation eines hierzu bis auf einen Skalenfaktor geometrisch identischen Objekts ist.

Es wird, beispielsweise punktweise im Arbeitsraum, der Quotient $Q(\mathbf{g})=I_2(\mathbf{g})/I_1(\mathbf{g})$ aus den beiden Funktionen $I_1(\mathbf{g})$ und $I_2(\mathbf{g})$ gebildet, so dass das unbekannte Eingangssignal unterdrückt wird sowie Zähler und Nenner jeweils die gesuchte Übertragungsfunktion mit unterschiedlich skalierten Argumenten enthalten. Im Idealfall wird das unbekannte Eingangssignal O($\mathbf{g}$) vollständig eliminiert. Der Quotient $Q(\mathbf{g})$ kann im Arbeitsraum nicht nur punktweise gebildet werden, sondern auch beispielsweise über Gebiete oder entlang von Wegen.

Seien die beiden Repräsentationen beispielsweise Bilder $I_1$ und $I_2$ desselben Objekts, die im Frequenzraum als Arbeitsraum die Darstellungen $I_1(\mathbf{g})$ und $I_2(\mathbf{g})$ haben. Ist die Vergrößerung des Bildes $I_1$ um den Faktor $\gamma$ größer als die des Bildes $I_2$, zeigen aber beide Bilder den gleichen Ausschnitt O($\mathbf{g}$) aus dem Objekt, dann macht sich der Unterschied in der Vergrößerung lediglich in unterschiedlichen Abtastraten der Übertragungsfunktion $T(\mathbf{g})$ bemerkbar. Für den Quotienten $Q(\mathbf{g})=I_2(\mathbf{g})/I_1(\mathbf{g})$ gilt dann:

$$Q(\mathbf{g}) = \frac{I_2(\mathbf{g})}{I_1(\mathbf{g})} = \frac{O(\mathbf{g})T(\gamma\mathbf{g})}{O(\mathbf{g})T(\mathbf{g})} = \frac{T(\gamma\mathbf{g})}{T(\mathbf{g})} \qquad (3)$$

Schließlich wird erfindungsgemäß aus dem Verlauf von $Q(\mathbf{g})$ der gesuchte Verlauf der Übertragungsfunktion $T(\mathbf{g})$ ausgewertet.

Es wurde erkannt, dass auf diese Weise die Übertragungsfunktion $T(\mathbf{g})$ bestimmt werden kann, ohne dass das nominelle Eingangssignal O($\mathbf{g}$) bekannt ist. Selbst völlig zusammenhangloses Rauschen, von dem kein mittlerer Funktionsverlauf bekannt ist, kann als Eingangssignal verwendet werden. Nach dem Stand der Technik war genau diese Kenntnis erforderlich, um durch Umstellen von Gl. (2) nach $T(\mathbf{g})=I(\mathbf{g})/O(\mathbf{g})$ an $T(\mathbf{g})$ zu kommen; kennt man nur $I(\mathbf{g})$, ist ohne jegliches zusätzliche Wissen weder eine Bestimmung von O($\mathbf{g}$) noch eine Bestimmung von $T(\mathbf{g})$ möglich ("blind deconvolution"-Problem). Bei Teleskopen beispielsweise verschaffte man sich diese Kenntnis, indem ein weit entfernter

4

Stern, der näherungsweise als Punktquelle angesehen werden kann, ins Visier genommen wurde. Bei Mikroskopen wurden Testproben mit bekannten Strukturen abgebildet. Indem nun gegenüber der "blind deconvolution"-Situation als einziges zusätzliches Wissen die unterschiedliche Skalierung von $I_1$ und $I_2$ eingesetzt wird und dafür eine Kenntnis von $O(\mathbf{g})$ nicht mehr benötigt wird, wird die Bestimmung von $T(\mathbf{g})$ erstmals für signalverarbeitende Systeme möglich, für die es keine geeigneten Testobjekte gibt.

Beispielsweise ist es bei einem Elektronenmikroskop, das bis in atomare Dimensionen vergrößert, nicht möglich, wohldefinierte Objekte abzubilden, da Testobjekte in atomarer Dimension nicht auf definierte Art und Weise zu präparieren sind. Man behilft sich nach dem Stand der Technik, indem man unter Umgehung der Elektronenoptik eine scharfe Kante unter Umgehung der Elektronenoptik direkt auf den Detektor legt, oder alternativ einen scharfen Schatten auf den Detektor projiziert. Da das Objektspektrum $O(\mathbf{g})$ einer ideal scharfen Intensitätsstufe bekannt ist, kann man aus der gemessenen Intensitätsverteilung $I(\mathbf{g})$ die Übertragungsfunktion $T(\mathbf{g})$ der CCD Kamera bestimmen. Zum anderen wird die Rauschmethode (engl. noise method) angewandt, bei der man die CCD Kamera gleichmäßig mit Elektronen ausleuchtet. Aufgrund des statistischen Charakters der Anzahl der pro Pixel einfallenden Elektronen stellt das Eingangssignal $O(\mathbf{g})$ weißes Rauschen dar. Durch Vergleich dieses bekannten Eingangssignals mit dem von der Kamera aufgenommenen Ausgangssignal $I(\mathbf{g})$ lässt sich wiederum gemäß $T(\mathbf{g})=I(\mathbf{g})/O(\mathbf{g})$ die Übertragungsfunktion $T(\mathbf{g})$ bestimmen. Beide Methoden führen in der Elektronenmikroskopie zu gewissen Schwierigkeiten. Bei der Kantenmethode muss meist die evakuierte Mikroskopsäule geöffnet werden, um einen Gegenstand mit scharfer Kante auf die Kamera zu legen. Zudem muss die Ausrichtung der scharfen Kante entlang der Pixelreihen wohldefiniert sein, was bei typischerweise 2048 Pixeln der Größe 15 Mikrometer entlang einer Dimension kaum machbar ist. Zusätzlich kann es zu Problemen kommen, da die Kante eine gewisse physikalische Dicke hat und somit auch Elektronen von der Kante auf den Detektor gestreut werden können, oder es können auch Röntgenquanten an der Kante entstehen, die vom Detektor unerwünschterweise registriert werden. Die Benutzung der Rauschmethode ist ebenso problematisch, da zwar der relative funktionale Verlauf der Übertragungsfunktion $T(\mathbf{g})$ bestimmt werden kann, aber eine Absolutnormierung von $T(\mathbf{g})$ nicht möglich ist.

Infolgedessen können in der Elektronenmikroskopie die mit den beiden Methoden bestimmten Übertragungsfunktionen ein und derselben CCD Kamera erheblich voneinander abweichen. Aufgrund dieser Unsicherheiten bei der Bestimmung der Übertragungsfunktion wird eine exakt quantitative Bildauswertung, die häufig einen Vergleich mit numerisch berechneten Bildsimulationen verwendet, erschwert oder sogar unmöglich gemacht. Die nun erfindungsgemäß geschaffene Möglichkeit, eine dritte alternative Messmethode zur Bestimmung der Übertragungsfunktion $T(\mathbf{g})$ zur Verfügung zu haben, erlaubt es, die Diskrepanzen bei der Bestimmung der Übertragungsfunktion in der Elektronenmikroskopie zu klären und die Genauigkeit bei der quantitativen Bildauswertung zu steigern.

Das erfindungsgemäße Verfahren kann nicht nur während des Betriebes des signalverarbeitenden Systems angewendet werden. Vielmehr kann $T(\mathbf{g})$ auch dann noch aus alten mit dem System angefertigten Repräsentationen (etwa Bildern) bestimmt werden, wenn es das System selbst längst nicht mehr gibt, sondern nur noch die Bilder ohne weitere Aufzeichnungen hierzu. Gibt es zwei Bilder, die das gleiche Objekt mit unterschiedlichen Vergrößerungen zeigen, reicht dies zur Bestimmung von $T(\mathbf{g})$ aus, und mit dieser Kenntnis können alle übrigen vorhandenen Bilder nachträglich verbessert werden. Beispielsweise können Aufnahmen von längst beendeten Raumsondenmissionen mit Hilfe des erfindungsgemäßen Verfahrens neu ausgewertet werden, so dass das Jahrzehnte alte Material auch heute noch neue Erkenntnisse liefert und im Extremfall eine neue Mission überflüssig wird.

Nullstellen von $I_1(\mathbf{g})$ im Nenner von Gl. (3), die auf Nullstellen der Übertragungsfunktion $T(\mathbf{g})$ zurückgehen, sind unproblematisch. Sie sind dadurch gekennzeichnet, dass $I_1(\mathbf{g})$ asymptotisch auf Null abfällt. Auf Grund der Retardierung von $I_2(\mathbf{g})$ gegenüber $I_1(\mathbf{g})$ hat $I_2(\mathbf{g})$ die Nullstellen von $I_1(\mathbf{g})$ bei kleineren Werten von $\mathbf{g}$. Gehen also ausgehend von $\mathbf{g}=0$ die Werte von $I_1(\mathbf{g})$ asymptotisch gegen Null, ist dies zuvor bereits im Zähler $I_2(\mathbf{g})$ von Gl. (3) geschehen, so dass der Quotient $Q(\mathbf{g})$ wohldefiniert ist.

Andere Nullstellen von $I_1(\mathbf{g})$, die auf Nullstellen des Eingangssignals $O(\mathbf{g})$ oder auf oszillatorisches Verhalten der Übertragungsfunktion $T(\mathbf{g})$ zurückzuführen sind, lassen sich beherrschen, indem diese Singularitäten aus der Berechnung von $T(\mathbf{g})$ ausgenommen werden. Insbesondere bei einem parametrisierten Ansatz für $T(\mathbf{g})$ wird bereits eine gewisse Glattheit des Verlaufs von $T(\mathbf{g})$ vorausgesetzt, beispielsweise in Form der Stetigkeit oder der maximalen Krümmung. Somit kann mit gutem Grund angenommen werden, dass die für den überwiegenden Teil ($\geq 95\,\%$) des Arbeitsraums zutreffende Lösung auch für die Singularitäten zutrifft. Insbesondere können Gebiete, auf denen sehr große Werte des Quotienten $Q(\mathbf{g})$ bzw. abgeleiteter Größen wie z.B. $\ln[Q(\mathbf{g})]$ oder $D(\mathbf{g})$ auftreten, aus der Berechnung von $T(\mathbf{g})$ ausgenommen werden. Man bedenke dabei, dass die Singularität nur künstlich durch die Division gemäß Gl. (3) hergestellt wurde, während die Kurven $T(\gamma\mathbf{g})$ und $T(\mathbf{g})$ selbst gar keine Singularität enthalten und durchweg "harmlos" sind und stetig verlaufen.

Im Folgenden wird gezeigt, dass sich aus dem Ausdruck für $Q(\mathbf{g})$ in eindeutiger Weise die gesuchte Übertragungsfunktion $T(\mathbf{g})$ bestimmen lässt. Ohne Beschränkung der Allgemeinheit wird nur eine Raumdimension g berücksichtigt, die sich auf das Koordinatensystem der ersten Repräsentation $I_1(\mathbf{g})$ bezieht.

In einem ersten Schritt wird die Quotientenkurve $Q(g)$ logarithmiert. Dadurch wird erreicht, dass nun aus dem Quotienten von $T(\gamma g)$ und $T(g)$ eine Differenz der beteiligten Logarithmen entsteht, also

$$\ln[Q(g)] = \ln[T(\gamma g)] - \ln T[(g)] =: \Delta \ln[T(G)] \qquad (4)$$

Dabei wurde ohne Einschränkung der Allgemeinheit davon ausgegangen, dass Q(g)>0 ist. Die Fallunterscheidung für Q(g)≤0, was bei einer oszillierenden Übertragungsfunktion T(g) auftreten kann, wurde der Übersichtlichkeit halber weggelassen.

Die Differenz der beiden Logarithmen ln[T(γg)] und ln[T(g)] wird hier mit dem Symbol Δln[T(G)] gekennzeichnet und dem zwischen den Frequenzen γg und g gelegenen arithmetischen Frequenzmittelpunkt G zugewiesen, der durch

$$G = g\,(1+\gamma)/2 \qquad (5)$$

definiert ist. Die zur Ordinatendifferenz Δln[T(G)] gehörige Abszissendifferenz ΔG ergibt sich als Differenz der beteiligten Frequenzen γg und g, sodass man für die zugehörige Abszissendifferenz ΔG den Ausdruck

$$\Delta G = g(\gamma - 1) \qquad (6)$$

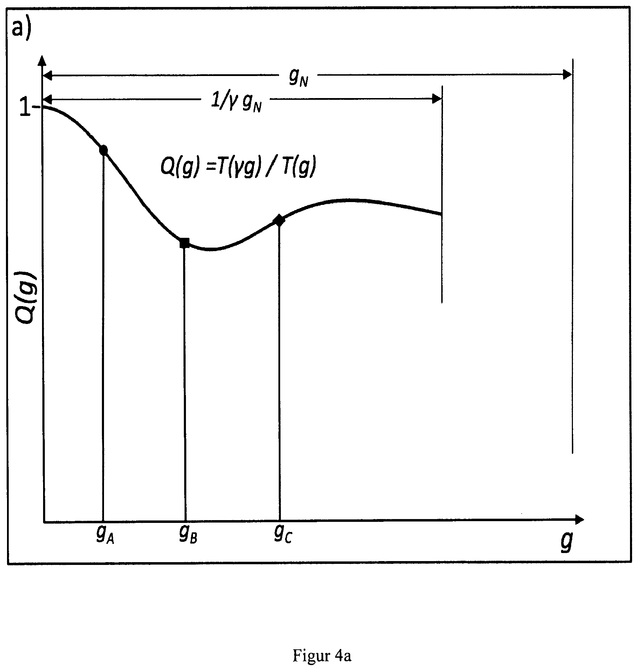

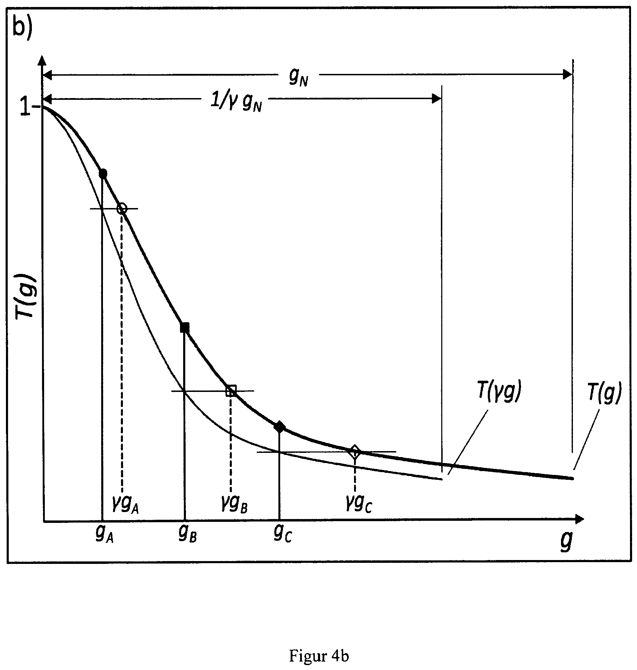

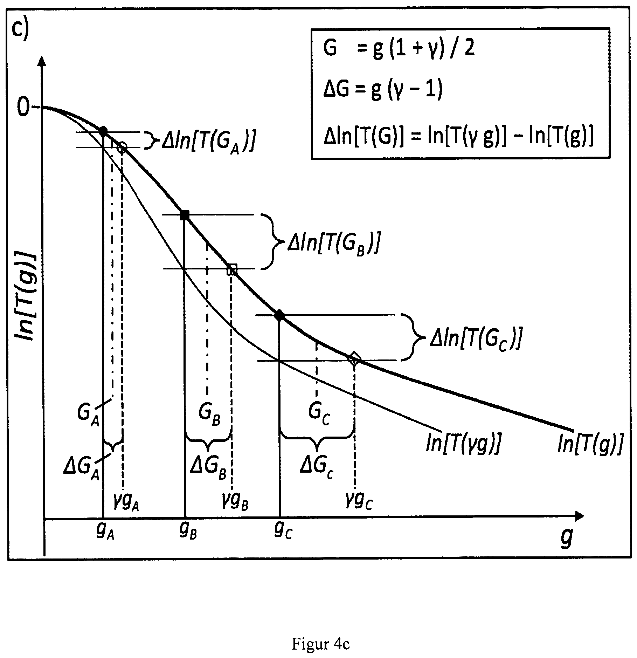

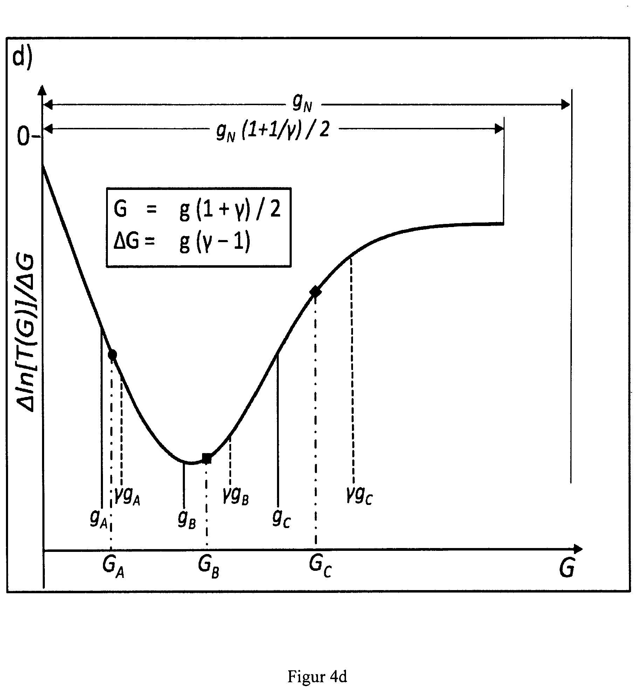

erhält. Die Bildung der beiden Differenzen Δln[T(G)] und ΔG ist im Speziellen Beschreibungsteil in Figur 4 graphisch verdeutlicht. Mit der Ordinatendifferenz Δln[T(G)] aus Gl. (4) und der Abszissendifferenz ΔG aus Gl. (6) lässt sich schließlich ein Differenzenquotient D(G) bilden, der folgendermaßen definiert werden kann:

$$D(G) = \frac{\Delta \ln[T(G)]}{\Delta G} \qquad (7)$$

Der Differenzenquotient D(G), der beispielhaft in Abbildung 4 dargestellt ist, kann unter Bezug auf das Referenzsystem der ersten Repräsentation bis zur Raumfrequenz g = $g_N$(1+1/γ)/2 gebildet werden, wobei $g_N$ die Nyquistfrequenz der ersten Repräsentation darstellt. Entscheidend ist nun, dass der so gebildete Differenzenquotient D(G) eine finite Näherung der Ableitung des Logarithmus der Übertragungsfunktion T(G) nach der Raumfrequenz G darstellt, d.h.

$$D(G) \approx \frac{\mathrm{d}\ln[T(G)]}{\mathrm{d}G} = \frac{1}{T(G)}\frac{\mathrm{d}T(G)}{\mathrm{d}G} \qquad (8)$$

Diese Näherung lässt sich nutzen, um aus den Differenzenquotienten D(G) die Übertragungsfunktion T(G) eindeutig zu bestimmen.

Für den Lösungsweg sind zwei Fälle zu unterscheiden: Zum einen kann die Frequenz G als kontinuerliche Variable betrachtet werden, was eine direkte Integration der Gl. (8) ermöglicht und so einen einfachen Einblick in das allgemeine Lösungsprinzip gewährt. Zum anderen liegen in der Praxis der numerischen Berechnung die Werte von D(G) jedoch nur an diskreten Frequenzen G vor, was eine diskrete Summation anstatt einer kontinuierlichen Integration erforderlich macht, wobei besonderes Augenmerk auf die Metrik der erhaltenen Frequenzen G gelegt werden muss.

Betrachtet man die Frequenz G als kontinuierliche Variable, so erhält man den Logarithmus der Übertragungsfunktion ln[T(G)] näherungsweise durch Integration von D(G), d.h.

$$S(G) = \int_0^G D(G')\,\mathrm{d}G' \approx \ln[T(G)], \qquad (9)$$

und die gesuchte Übertragungsfunktion T(G) ergibt sich schließlich durch Exponentiation, so dass

$$T(G) \approx \mathrm{Exp}[S(G)]. \qquad (10)$$

Die üblicherweise anfallende Integrationskonstante in Gl. (9) wurde weggelassen, da sie exakt 0 ist. Geht man nämlich von der physikalisch vernünftigen Annahme aus, dass T(0) gleich 1 sein muss, so muss S(0) gleich 0 sein, wodurch die Integrationskonstante in Gl. (9) ebenfalls 0 sein muss.

Nach der verallgemeinerten Darstellung des Lösungsweges für kontinuierliche Frequenzen soll nun auf die Praxis der numerischen Berechnung eingegangen werden, bei denen die Eingangskurve Q(g) gemäß Gl. (3) nur an bestimmten diskreten Werten von g vorliegt. Letzterer Fall ist typisch für Frequenzspektren, die mittels FFT (Fast Fourier Transform) erhalten wurden. Seien die Repräsentationen $I_1$ und $I_2$ beispielsweise Bilder, die mit einem in diskrete Pixel unterteilten CCD-Sensor aufgenommen wurden. Dann lassen sich für ein Realraumfeld aus N Pixeln die zugehörigen diskreten Frequenzen des Fourierraums gemäß Abb. (3) mittels ganzzahliger Werte n=0, $\pm1$, $\pm3$ ... $\pm n_N$ indizieren, wobei der Index $n_N$ die Nyquistfrequenz bezeichnet. Der Index n einer bestimmten Frequenz entspricht der Anzahl der Perioden der zugehörigen ebenen Welle Exp[2 i $\pi$ n/N], die in dem Realraumfeld der Pixelanzahl N zu liegen kommen. Bei Wahl des Bildes 1 als Referenzbild kann man nun von Gl. (3) ausgehend g = n = 0, $\pm1$, $\pm3$ ... $\pm n_N$ setzen. Es ist jedoch hernach nicht mehr möglich, eine ganzzahlige Arithmetik aufrechtzuerhalten, da durch die Einführung des im Allgemeinen nicht ganzzahligen Vergrößerungsverhältnisses $\gamma$ gemäß Gl. (5) Zwischenfrequenzen G auftreten, die weder der ganzzahligen Metrik des Bildes 1 noch der des Bildes 2 folgen, sondern der eines Bildes mit einer zwischen Bild 1 und 2 gelegenen Vergrößerung. Das Auftreten von Zwischenfrequenzen G ist also eine Folge der wechselweise symmetrischen Behandlung der Bilder 1 und 2. Nach dem Einsetzen dimensionsloser Indizes g = n = 0, $\pm1$, $\pm3$ ... $\pm n_N$ in Gl. (3) lässt sich die Rechnung jedoch bis Gl. (7) exakt wie zuvor beschrieben durchführen, wobei jetzt für G und $\Delta$G im Allgemeinen keine ganzzahligen dimensionslosen Werte im Sinne eines Index oder einer Indexdifferenz auftreten, sondern beliebige rationale Werte. Eine von mehreren Möglichkeiten, die für die numerische Berechnung benötigte ganzzahlige Metrik des als Referenz gewählten Bildes 1 wiederherzustellen, sei nun im Folgenden beschrieben.

Da die Differenzenquotienten D(G) nach Einsetzen von g = n = 0, $\pm1$, $\pm3$ ... $\pm n_N$ in Gl. (3) nun an nicht-ganzzahligen dimensionslosen Werten von G zu liegen kommen, liegt es nahe, diese Werte von G als Stützstellen für ein Interpolationsverfahren zu benutzen, mittels dessen sich die Differenzenquotienten D(G) an den gewünschten Frequenzen G = n = 0, $\pm1$, $\pm2$ ... berechnen lassen. Diese Interpolation von D(G) lässt sich formal folgendermaßen darstellen als

$$D(G \in \Re) \rightarrow D(n \in N). \qquad (11)$$

Bezeichnet man den so an ganzzahligen Stützstellen n erhaltenen Differenzenquotienten D(n) als $D_n$, und analog T(k) als $T_k$, sowie S(k) als $S_k$, so wird aus der infintesimalen Integration von Gl. (9) nun eine Summation, wobei gilt:

$$S_k = \sum_{n=0}^{k} D_n \approx \ln[T_k]. \qquad (12)$$

Schließlich erhält man analog zu Gl. (10) an der mit der ganzen Zahl k indizierten Frequenz des Referenzbildes 1 die gesuchte Lösung für die Übertragungsfunktion $T_k$ mit

$$T_k \approx \mathrm{Exp}[S_k]. \qquad (13)$$

Somit wird in einer besonders vorteilhaften Ausgestaltung der Erfindung aus dem kontinuierlich bzw. an diskreten Stützstellen erklärten Logarithmus von Q(**g**) ein kontinuierlich bzw. an diskreten Stützstellen erklärter Differenzenquotient für den Logarithmus von T(**g**) gebildet. Vorteilhaft wird dieser integriert bzw. summiert. Damit kann aus den unterschiedlich skalierten Repräsentationen direkt für jede Stützstelle im Arbeitsraum ein unabhängiger Wert für die Übertragungsfunktion T(**g**) als Lösung erhalten werden, ohne dass T(**g**) von vornherein auf eine bestimmte Klasse von Funktionen eingeschränkt wäre.

Bei hohen Raumfrequenzen g kann $\Delta$G im Nenner von Gl. (7), das gemäß Gl. (6) mit der Raumfrequenz g ansteigt, zu groß werden. Dann wird die Näherung, dass D(G) als Ableitung von ln[T(G)] an der Stelle G angesehen wird, ungenau. Dies wiederum verschlechtert die Genauigkeit, mit der T(G) durch Summation bzw. Integration aus dem Differenzenquotienten D(G) bestimmt werden kann. Obwohl dies bei typischen Übertragungsfunktionen, die in der Regel nur langsam variieren, kaum der Fall ist, könnten bei untypischen Übertragungsfunktionen, die bei hohen Raumfrequenzen stark gekrümmt sind oder gar oszillieren, augrund der starr vorgegebenen Frequenzdifferenzen $\Delta$G derartige Ungenauigkeiten auftreten. Je näher die beiden Funktionen $I_1$(**g**) und $I_2$(**g**) in ihrer Skalierung beieinander liegen, desto geringer sind diese Ungenauigkeiten.

Bei tiefen Ortsfrequenzen treten bei geringen Ortsfrequenzen sowohl im Zähler auch im Nenner des Differenzenquotienten nach Gl. (10) sehr kleine Werte auf, da typische Übertragungsfunktionen in der Regel nur langsam variieren. Starkes Rauschen in den Repräsentationen (Bildern) kann dann den Differenzenquotienten dominieren. Je weiter die beiden Funktionen $I_1(\mathbf{g})$ und $I_2(\mathbf{g})$ in ihrer Skalierung auseinanderliegen, desto größer wird $\Delta G$ im Nenner von Gl. (7) und desto mehr der Einfluss des Rauschens zurückgedrängt.

Somit ist mit dem Wert von $\gamma$ ein unvermeidlicher Kompromiss zwischen der Genauigkeit bei hohen Ortsfrequenzen und der Genauigkeit bei tiefen Ortsfrequenzen einzustellen.

Daher werden in einer weiteren vorteilhaften Ausgestaltung der Erfindung für die Bildung des Differenzquotienten für eine Position $\mathbf{g}$ im Arbeitsraum aus einer Mehrzahl von mindestens drei Repräsentationen zwei Ausschnitte aus verschiedenen Repräsentationen und damit zwei Funktionen $I_1(\mathbf{g})$ und $I_2(\mathbf{g})$ ausgewählt, die sich um einen vorgegebenen Skalierungsfaktor $\gamma$ voneinander unterscheiden.

Sollte mit einem einzigen Vergrößerungsfaktor $\gamma$ kein hinreichend guter Kompromiss gefunden werden können, der die Bildung des Differenzquotienten sowohl bei niederen als auch bei hohen Frequenzen mit ausreichender Genauigkeit ermöglicht, kann auch mit mehreren Bildern, die in jeweils unterschiedlichen Vergrößerungsverhältnissen $\gamma$ zueinander stehen, gearbeitet werden. Durch adaptive Wahl von $\gamma$ für verschiedene Positionen $\mathbf{g}$ im Arbeitsraum kann der Differenzquotient aus Gl. (7) an jeder gewünschten Stelle der Frequenzachse so gebildet werden, dass er gemäß Gl. (8) als zuverlässige und ausreichend genaue Näherung für den Differentialquotienten genutzt werden kann. Insbesondere bei oszillierenden Übertragungsfunktionen müssen die Stützpunkte für die Bildung des Differenzquotienten so eng liegen (kleines $\Delta G$), dass nicht eine komplette Oszillation innerhalb einer Spannbreite $\Delta G$ stattfindet. Ansonsten hat man bei höheren Frequenzen den klaren Fall einer Unterabtastung vorliegen. Deshalb ist hier in jedem Falle ein Mehrbildverfahren mit mehreren unterschiedlichen Vergrößerungen angeraten.

Dabei hängt es von $\gamma$ ab, über welchen Bruchteil des Arbeitsraums die Übertragungsfunktion $T(\mathbf{g})$ bestimmt werden kann (vergleiche Figur 4d). Im zweidimensionalen Fall für $\gamma=2$ kann die Übertragungsfunktion noch auf 56,25 % des Arbeitsraums bestimmt werden, im eindimensionalen Fall auf 75 % des Arbeitsraums. Insofern hat sich der Bereich $1 \leq \gamma \leq 2$ als vorteilhaft erwiesen.

Die Ausnutzung des Arbeitsraums kann im zweidimensionalen Fall verbessert werden, indem die Auswertung nicht nur bis zur eindimensional definierten Nyquistfrequenz, also bis zum Rand des Spektrums, sondern bis zum $\sqrt{2}$-Fachen hiervon, also bis in die Ecken des Spektrums, fortgesetzt wird. Soll die Übertragungsfunktion $T(g)$ ohne jeglichen Frequenzverlust bis zur eindimensionalen Nyquistfrequenz ermittelt werden, sind Werte von $\gamma$ bis zu 2,41 zulässig.

Sofern $I_1(\mathbf{g})$ und $I_2(\mathbf{g})$ zwecks Rauschunterdrückung vor der Berechnung von $Q(\mathbf{g})$ azimuthal gemittelt werden, ist hier als Nebeneffekt zu berücksichtigen, dass diese Mittelung in Richtung der Ecke des Frequenzraums in einem immer weiter eingeschränkten Winkelbereich möglich ist, der für das Eckpixel selbst dann zu Null zusammenschmilzt.

Als hohe Ortsfrequenzen sind typischerweise Frequenzen oberhalb der halben Nyquistfrequenz anzusehen. Bei diskreter Abtastung haben diese einen Index $n>n_N/2$, wobei $n_N$ der Index der Nyquistfrequenz ist. Niedrige Ortsfrequenzen lassen sich über das Kriterium abgrenzen, dass der Abstand dieser Frequenzen bei diskreter Abtastung mindestens 1 Pixel betragen soll. In anderen Worten: Der Differenzquotient soll wenigstens über den Abstand 1 Pixel gebildet werden. Dann hat man: $\gamma\, n - n = n(\gamma-1) > 1$, d.h. $n > 1/(\gamma-1)$, wobei $n$ die diskrete Indizierung der Frequenzen bedeutet. Für $\gamma = 1.1$ erhält man dann beispielsweise $n > 10$, für $\gamma = 1.5$ erhält man $n > 2$, für $\gamma = 2$ erhält man $n > 1$. Frequenzen die kleiner als das angegebene $n$ sind, sind sicher als niedere Frequenzen anzusehen, also Frequenzen für die gilt: $n < 1/(\gamma-1)$. Dies ist die unterste Grenze im Falle rauschfreier Repräsentationen (Bilder). Tritt zusätzlich Rauschen auf, sollte die entsprechende Unsicherheit mit berücksichtigt werden. Typischerweise sind Frequenzen mit $n < 10$ als niedrige Frequenzen anzusehen.

Ist der Arbeitsraum der Fourierraum, sind auf Grund der begrenzten Möglichkeiten einer Rauschmittelung die Werte von $Q(\mathbf{g})$ für niedrige Frequenzen $\mathbf{g}$ mit besonders großen statistischen Fehlerbalken behaftet. Da die Repräsentationen $I_1(\mathbf{g})$ und $I_2(\mathbf{g})$ im Fourierraum für $\mathbf{g}$ in der Nähe von 0 typischerweise einen starken Gradienten aufweisen, können dort auch systematische Fehler verstärkt werden. Dem kann vorteilhaft entgegengewirkt werden, indem $Q(\mathbf{g})$ für niedrige Frequenzen $\mathbf{g}$ aus Werten für benachbarte höhere Frequenzen $\mathbf{g}$ extrapoliert wird.

In einer weiteren vorteilhaften Ausgestaltung der Erfindung wird für die Übertragungsfunktion $T(\mathbf{g})$ ein parametrisierter Ansatz gemacht und mit einem Optimierungsverfahren daraufhin optimiert, dass aus $T(\mathbf{g})$ der Quotient $Q(\mathbf{g})$ oder ein daraus abgeleiteter Funktionsverlauf bestmöglich reproduziert wird. Da zuvor bewiesen wurde, dass eine eindeutige Lösung für $T(\mathbf{g})$ existiert, muss es sich bei einer durch Optimierung gefundenen Lösung für $T(\mathbf{g})$, die $Q(\mathbf{g})$ oder einen daraus abgeleiteten Funktionsverlauf exakt reproduziert, um diese eindeutige Lösung handeln. Als abgeleiteter Funktionsverlauf eignen sich z.B. der Logarithmus des Quotienten $\ln[Q(g)]$ aus Gl. (4) oder der Differenzquotient $D(G)$ aus Gl. (7).

In einer Ausgestaltung kann $T(\mathbf{g})$ auf bestmögliche Übereinstimmung des Quotienten $T(p\mathbf{g})/T(\mathbf{g})$ mit dem aus $I_1(\mathbf{g})$ und $I_2(\mathbf{g})$ erhaltenen Quotienten gemäß Gl. (3) optimiert werden, worin $p$ ein Skalierungsfaktor ist. Als Wert für diesen Skalierungsfaktor kann vorteilhaft der vorbekannte oder bei der Anfertigung der Repräsentationen $I_1(\mathbf{x})$ und $I_2(\mathbf{x})$ eingestellte Skalierungsfaktor $\gamma$, um den sich diese Repräsentationen unterscheiden, eingestellt werden. Der Wert von $p$ kann im Rahmen eines Optimierungsverfahrens bestimmt werden. Auch eine Kombination ist möglich. Voraussetzung hierfür ist, dass bei einer Änderung von $p$ die Ausschnitte $I_1(\mathbf{g})$ und $I_2(\mathbf{g})$ durch passende Gebietsauswahl im Realraum entsprechend angepasst werden und eine Erkennung für eine falsche Gebietsauswahl vorgesehen ist.

Ein parametrisierter Ansatz für die Übertragungsfunktion lässt sich beispielsweise durch eine lineare Superposition aus Gaußkurven, fallenden Exponentialfunktionen, Lorentzfunktionen oder ähnlichen Funktionen herstellen, wobei die benutzte Anzahl von Parametern, mittels derer die Gewichtungsfaktoren der beteiligten Funktionen sowie deren Breite beschrieben wird, typischerweise kleiner als 10 ist. Durch den parametrisierten Ansatz wird die Klasse der möglichen Funktionen T(g), die als Lösung erhalten werden können, eingeschränkt. Dies aber bewirkt im Gegenzug, dass der Ansatz robuster gegen Rauschen in den Repräsentationen $I_1(g)$ und $I_2(g)$ ist. Damit kann zumindest teilweise der Tendenz eines jeden Entfaltungsverfahrens entgegengewirkt werden, dieses Rauschen zu verstärken. Meist ist nach Erhalt einer stark verrauschten Lösung die Anwendung eines Glättungsverfahrens nötig, welches benachbarte diskrete Frequenzen der Übertragungsfunktion im Sinne einer lokalen Mittelwertbildung miteinander verknüpft.

In einer weiteren vorteilhaften Ausgestaltung der Erfindung wird vor der Transformation in den Arbeitsraum die Repräsentation mit der geringeren Ausdehnung im Realraum auf die Ausdehnung der anderen Repräsentation hochinterpoliert. Dann sind beide Repräsentationen anschließend mit einer Transformation der gleichen Dimension in den Arbeitsraum überführbar. Dies wird damit erkauft, dass die Interpolation selbst wieder eine Übertragungsfunktion ist, mit der nur eine der beiden Repräsentationen behaftet ist. Ihr Einfluss auf das Endergebnis muss charakterisiert werden und hängt von der Ordnung der Interpolation ab.

Analog kann vor der Transformation in den Arbeitsraum eine der Repräsentationen im Realraum gedreht und/oder gespiegelt werden. Damit kann eine vorhandene Drehung und/oder Spiegelung zwischen zwei ansonsten identischen Repräsentationen ausgeglichen werden. Dann können in dem Fall, dass die Übertragungsfunktion T(**g**) rotationssymmetrisch ist, auch Repräsentationen, die sich neben einer unterschiedlichen Skalierung auch noch durch Drehung und/oder Spiegelung unterscheiden, zur Deckung gebracht werden, so dass die Quotientenbildung gemäß Gl. (3) möglich ist. Dabei ist zu berücksichtigen, dass die Drehung und die Spiegelung weitere zusätzliche Übertragungsfunktionen einbringen, mit denen nur eine der beiden Repräsentationen behaftet ist. Ist der Realraum in diskrete Pixel unterteilt, kommt das Ergebnis der Drehung und/oder Spiegelung zudem im Allgemeinen nicht auf ganzzahligen Pixelkoordinaten zu liegen; dann wird eine Interpolation, die eine weitere Übertragungsfunktion einbringt, notwendig.

Die Drehung und/oder Spiegelung kann beispielsweise ausgeführt werden, indem die Quotientenbildung gemäß Gl. (3) dahingehend abgeändert wird, dass der Quotient $Q(\mathbf{g})=I_2(\mathbf{g})/I_1(\mathbf{Dg})$ gebildet wird, worin **D** die Transformationsmatrix der Drehung und/oder Spiegelung ist. Sofern die Funktionen $I_2(\mathbf{g})$ und $I_1(\mathbf{g})$ im Arbeitsraum hinreichend glatt sind, kann zumindest die zusätzliche Interpolation auf ganzzahlige Pixelkoordinaten entfallen.

In einer weiteren vorteilhaften Ausgestaltung der Erfindung werden die Repräsentationen im Arbeitsraum in Polarkoordinaten transformiert und in dieser Darstellung azimuthal gemittelt. Häufig ist die Annahme gerechtfertigt, dass es sich bei der gesuchten Übertragungsfunktion um eine rotationssymmetrische Funktion handelt. Dies ist beispielsweise bei elektronenmikroskopischen Bildern der Fall. Es wurde erkannt, dass die Division gemäß Gl. (3) instabil ist, insbesondere wenn die als Divisor dienende Repräsentation $I_1(\mathbf{g})$ stark verrauscht ist. Das Rauschen kann durch die Division verstärkt werden, was wiederum die Genauigkeit beeinflusst, mit der von $Q(\mathbf{g})=T(\gamma\mathbf{g})/T(\mathbf{g})$ auf $T(\mathbf{g})$ zurückgerechnet wird. Es kann daher in speziellen Fällen von Vorteil sein, die Repräsentationen durch die Mittelung vorab zu glätten. Man erhält damit eine eindimensionale Funktionen I'(g), wobei die azimuthale Mittelung der komplexwertigen Fourierkoeffizienten I(g,φ) beispielsweise folgendermaßen beschrieben werden kann:

$$I'(g) = \left( \frac{1}{2\pi} \int_0^{2\pi} |I(g,\varphi)|^2 \, \mathrm{d}\varphi \right)^{1/2} \tag{14}$$

Diese azimuthale Mittelung ist ausdrücklich keine zwingende Voraussetzung dafür, dass die Berechnung der Übertragungsfunktion T(**g**) gemäß den Gln. (4) bis (13) in einer Raumdimension durchgeführt werden kann. Das allgemeine Problem, diese Funktion in zwei oder mehr Dimensionen Punkt für Punkt zu bestimmen, lässt sich in Polarkoordinaten durch Zerlegung in unabhängige eindimensionale radiale Sektionen durch den Koordinatenursprung immer auf eine Dimension zurückführen, auch wenn zuvor keine azimuthale Mittelung durchgeführt wird. Die azimuthale Mittelung ist lediglich eine Option im Sonderfall, dass die Übertragungsfunktion T(**g**) rotationssymmetrisch ist.

Die durch die azimuthale Mittelung erreichte Glättung kann jedoch zu einer systematischen Anhebung der so erhaltenen Kurve I'(g) führen, da die Betragsquadratbildung im Integranden des Integrals (14) stets einen positiven quadratischen Rauschterm enthält. Dieser mögliche systematische Rauschbeitrag kann gesondert entfernt werden, wenn man das tatsächlich vorhandene Rauschspektrum N(g) kennt. Durch quadratische Subtraktion des Rauschspektrums lässt sich die Bildintensität I'(g) korrigieren und man erhält für die rauschkorrigierte Bildintensität I(g) schließlich den Ausdruck:

$$I(g) = \left(I'(g)^2 - N(g)^2\right)^{1/2} \tag{15}$$

Häufig ist der Rauschbeitrag $N(g)^2$ aus Gleichung (15) über beinahe den gesamten Raumfrequenzbereich sehr viel kleiner als der vom Signal dominierte Beitrag $I'(g)^2$ und die Korrektur nach Gleichung (15) macht sich nur in den äußersten hochfrequenten Bereichen eines Spektrums, wo das Objektspektrum und die Übertragungsfunktion sehr kleine Werte annehmen, überhaupt erst bemerkbar. Da die Korrektur nur über einen relativ schmalen Raumfrequenzbereich am Rande der Fouriertransformierten überhaupt wirksam ist, kann man auch annehmen, dass sich das Rauschspektrum $N(g)$ über diesen schmalen Bereich nicht signifikant ändert und sich näherungsweise durch eine Konstante c ersetzen lässt. Man kann in einem solchen Falle näherungsweise anstelle der Gl. (15) auch den folgenden vereinfachten Ausdruck zur Rauschkorrektur benutzen:

$$I(g) \approx \left(I'(g)^2 - c^2\right)^{1/2}. \tag{16}$$

Vorteilhaft wird also aus den azimuthal gemittelten Repräsentationen jeweils ein Rauschspektrum oder ersatzweise ein konstanter Rauschuntergrund herauskorrigiert.

Alternativ oder in Kombination zu der azimuthalen Mittelung können mehrere identisch skalierte Repräsentationen entweder im Realraum oder im Arbeitsraum vor der Quotientenbildung nach Gl. (3) gemittelt werden. Dieses Mittel wird dann als im weiteren Verfahren als eine Repräsentation $I_1(\mathbf{x})$ bzw. $I_1(\mathbf{g})$ oder $I_2(\mathbf{x})$ bzw. $I_2(\mathbf{g})$ verwendet. Diese alternative Möglichkeit ist besonders wichtig in dem Fall, in dem die Übertragungsfunktion $T(\mathbf{g})$ nicht rotationssymmetrisch ist, weil dann eine azimuthale Mittelung nicht erlaubt ist.

Zur weiteren Rauschunterdrückung können die Repräsentationen $I_1(\mathbf{g})$ und $I_2(\mathbf{g})$ vor der Quotientenbildung nach Gl. (3) noch mit lokaler Faltung geglättet werden

Im Rahmen der Erfindung wurde ein weiteres Verfahren zur Bestimmung der Übertragungsfunktion eines signalverarbeitenden Systems entwickelt. Dieses Verfahren unterscheidet sich von dem Verfahren gemäß Hauptanspruch dadurch, dass noch keine Eingabedaten $I_1(\mathbf{x})$ und $I_2(\mathbf{x})$ vorliegen, sondern nur das signal verarbeitende System als solches. Daher werden bei diesem Verfahren mit dem System zunächst

> a) mindestens zwei unterschiedlich skalierte Repräsentationen $I_1(\mathbf{x})$ und $I_2(\mathbf{x})$ eines Objekts oder

> b) mindestens eine Repräsentation $I_1(\mathbf{x})$ eines ersten Objekts und eine Repräsentation $I_2(\mathbf{x})$ eines hierzu bis auf einen Skalenfaktor geometrisch identischen Objekts erzeugt.

Sodann wird mit diesen Repräsentationen das zuvor beschriebene Verfahren durchgeführt.

Die beiden Repräsentationen $I_1(\mathbf{x})$ und $I_2(\mathbf{x})$ können beispielsweise folgendermaßen erhalten werden:

Alternative a):

Es wird ein und dasselbe Objekt benutzt, um zwei unterschiedlich skalierte Repräsentationen $I_1(\mathbf{x})$ und $I_2(\mathbf{x})$ hiervon zu erzeugen. Hierfür gibt es zwei Möglichkeiten:

> 1. In einer weiteren vorteilhaften Ausgestaltung der Erfindung wird die unterschiedliche Skalierung der Repräsentationen $I_1(\mathbf{x})$ und $I_2(\mathbf{x})$ durch eine Änderung der Skalierung des vom Objekt am Eingang des Systems erzeugten Eingangssignals $O(\mathbf{x})$ eingestellt. Das bedeutet, dass die unterschiedlich skalierten Repräsentationen auf dem Detektor des Systems mit Hilfe des signalverarbeitenden Systems erzeugt werden. Bei einem (Elektronen-)Mikroskop kann beispielsweise die Vergrößerung geändert werden, so dass man verschieden vergrößerte Abbildungen desselben Objekts vorliegen hat. Die Benutzung der optischen Zoom-Funktion bei einem Photoapparat hat eine analoge Wirkung, wobei sichergestellt werden muss, dass sich die Abbildungseigenschaften des Objektivs durch den Zoomvorgang nicht signifikant verändern. Bei einer EELS-Messung wird die Vergrößerung durch die am Spektrometer eingestellte Dispersion bestimmt. Je höher die Dispersion ist, desto weiter wird das Spektrum räumlich auf dem CCD-Chip der Kamera gestreckt, wenn die Energie verändert wird. Dadurch wird die Abtastrate der Kamera in Bezug auf die Energie größer, und das Spektrum kann mit höherer Energieauflösung bestimmt werden. Dies entspricht einer höheren Vergrößerungsstufe bei einer photographischen oder mikroskopischen Bildaufnahme.
> 2. In einer weiteren vorteilhaften Ausgestaltung der Erfindung wird die unterschiedliche Skalierung der Repräsen-

tationen $I_1(\mathbf{x})$ und $I_2(\mathbf{x})$ durch eine Änderung des räumlichen Abstands zwischen dem Objekt und dem signalverarbeitenden System eingestellt. Das signalverarbeitende System selbst bleibt dabei im Gegensatz zur vorherigen Ausgestaltung unverändert und erhält bereits zwei unterschiedlich skalierte Eingangssignale $O(\mathbf{x})$. Eine typische Anwendung ist die Aufnahme ein und desselben Objekts mittels eines Photoapparates aus verschiedenen Entfernungen, ohne dass die Einstellungen des Photoapparats geändert werden.

Alternative b):

Man benutzt zwei oder mehrere tatsächlich physikalisch vorliegende Objekte bzw. Signalformen als Eingangssignal, die wechselseitig identische Form (Funktionsverlauf) besitzen, jedoch von unterschiedlicher Ausdehnung (Skalierung) sind. Ein Beispiel hierfür ist das Abphotographieren zweier unterschiedlich vergrößerter und hinreichend scharfer Ausdrucke desselben Motivs mittels eines Photoapparates unter identischen Abbildungsbedingungen. Der Abstand zum signalverarbeitenden System sowie die Einstellungen des Systems selbst können unverändert bleiben.

Zusätzlich kann man insbesondere im Zusammenhang mit Ausgestaltung 1 von Alternative a) anstatt eines herkömmlichen Objektes auch Rauschen als Eingangssignal benutzen, wobei der funktionale Verlauf des Rauschspektrums aber nun nicht mehr bekannt sein muss. Es kann also im Gegensatz zum Stand der Technik ein beliebiges Rauschsignal als Eingangssignal benutzt werden, indem dieses in mindestens zwei verschieden skalierten Varianten registriert wird.

In einer weiteren vorteilhaften Ausgestaltung der Erfindung wird mindestens eine der Repräsentationen $I_1(\mathbf{x})$ und $I_2(\mathbf{x})$ als Zusammenfassung von mindestens zwei Einzelrepräsentationen erzeugt. Beispielsweise können mit einem Photoapparat oder einem (Elektronen-)Mikroskop bei identischen Einstellungen mehrere Bilder nacheinander aufgenommen werden. Die Einzelrepräsentationen können direkt im Realraum addiert werden. Alternativ können Ausschnitte aus den Einzelrepräsentationen ausgewählt und deren Entsprechungen im Arbeitsraum zu den Funktionen $I_1(\mathbf{g})$ bzw. $I_2(\mathbf{g})$ zusammengefasst werden.

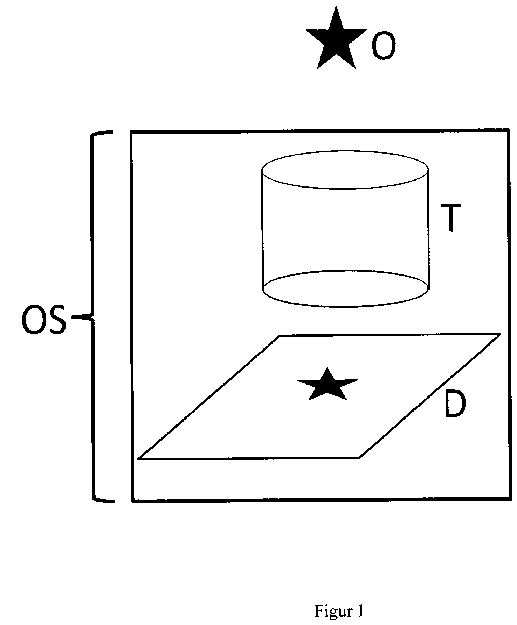

Hinsichtlich eines Elektronenmikroskops als signalverarbeitendes System ist anzumerken, dass die Vergrößerungsänderung durch die Hintereinanderschaltung der sogenannten Zwischenlinsen und der sogenannten Projektorlinse bewirkt wird, welche als fehlerfrei angesehen werden. Diese Linsen deshalb optisch "neutral" und wirken im Sinne einer mathematisch idealen Vergrößerung; es wird lediglich die Objektfunktion bezüglich des Detektors umskaliert. Aufgrund der optischen Neutralität dieser Linsen entspricht eine mit dem hier dargestellten Verfahren gemessene Übertragungsfunktion nur der Übertragungsfunktion des Detektors und ist nicht mehr vom vorgeschalteten Linsensystem beeinflusst (siehe Figur 1 im Speziellen Beschreibungsteil).

Hinsichtlich eines Photoapparats als signalverarbeitendes System ist anzumerken, dass sich die Übertragungsfunktion aus einem Beitrag des Kameraobjektivs und einem Beitrag des Films bzw. des CCD-Sensors zusammensetzt (siehe Figur 1 im Speziellen Beschreibungsteil). Hier ist es wichtig dass sich der Beitrag des Kameraobjektivs zwischen den einzelnen Aufnahmen nicht ändert. Bei der zweiten Möglichkeit von Alternative a) kann dies dadurch erreicht werden, dass sich das Objekt bei allen Aufnahmen jenseits der sogenannten hyperfokalen Entfernung befindet, womit ein individuelles "Scharfstellen" der einzelnen Aufnahmen nicht mehr nötig ist. Auf diese Weise kann man mit der Entfernungseinstellung "Unendlich" durch reine Abstandsänderung unterschiedlich vergrößerte und ausreichend scharfe Aufnahmen ein und desselben weit entfernten Objekts erhalten. Bei der Alternative b) kann der Beitrag des Kameraobjektivs konstant gehalten werden, indem bei festem Objektabstand zwei verschieden vergrößerte und hinreichend scharfe Ausdrucke eines beliebigen Motivs als Objekt benutzt werden.

Im Rahmen der Erfindung wurde ein weiteres Verfahren zur Bestimmung der Übertragungsfunktion $T(\mathbf{x})$ eines signalverarbeitenden Systems und des Eingangssignals $O(\mathbf{x})$, das ein unbekanntes Objekt am Eingang dieses Systems erzeugt, aus mindestens zwei Repräsentationen $I_1(\mathbf{x})$ und $I_2(\mathbf{x})$ des Objekts, die das System aus unterschiedlichen Skalierungen dieses Eingangssignals $O(\mathbf{x})$ erzeugt hat, entwickelt.

Dabei können die unterschiedlichen Skalierungen des Eingangssignals $O(\mathbf{x})$ auf jede zuvor beschriebene Weise erzeugt werden. Insbesondere kann das System selbst dieses Eingangssignal skalieren, oder es können als Repräsentationen $I_1(\mathbf{x})$ und $I_2(\mathbf{x})$ eine Repräsentation $I_1(\mathbf{x})$ eines ersten Objekts und eine Repräsentation $I_2(\mathbf{x})$ eines hierzu bis auf einen Skalenfaktor geometrisch identischen Objekts verwendet werden. Dabei können die beiden Repräsentationen analog dem zuvor Gesagten wie bei dem Verfahren gemäß Hauptanspruch als Eingabedaten vorgegeben sein oder aber zu Beginn des Verfahrens wie bei dem Verfahren gemäß Nebenanspruch erzeugt werden.

Erfindungsgemäß werden parametrisierte Ansätze für die Objektfunktion $O(\mathbf{x})$ und für die Übertragungsfunktion $T(\mathbf{x})$ selbstkonsistent dahingehend optimiert, dass $T(\mathbf{x})$ angewendet auf $O(x)$ die beiden Repräsentationen $I_1(\mathbf{x})$ und $I_2(\mathbf{x})$ reproduziert.

Da es nach der Ermittlung der Übertragungsfunktion $T(\mathbf{x})$ möglich ist, durch Entfaltung beispielsweise des Bildes 1 auch die Objektfunktion $O(\mathbf{x})$ zu erhalten, steckt also die komplette Information sowohl über die Objektfunktion $O(\mathbf{x})$ als auch über die Übertragungsfunktion $T(\mathbf{x})$ in dem aus den Repräsentationen $I_1(\mathbf{x})$ und $I_2(\mathbf{x})$ bestehenden Eingabedaten. Mit dem erfindungsgemäß aufgestellten Gleichungssystem

$$I_1(\mathbf{x}) = O(\mathbf{x}) \otimes T(\mathbf{x})$$

$$I_2(\mathbf{x}) = O(\mathbf{x}) \otimes T(\gamma\mathbf{x})$$

können beide gesuchten Funktionen O(**x**) und T(**x**) synchron bestimmt werden. Bei diesem Verfahren wird gar kein expliziter Gebrauch von der Quotientenkurve nach Gl. (7) und den daraus abgeleiteten funktionalen Zusammenhängen der Gln. (8) bis (14) gemacht. Ist man durch Probieren oder durch Anwendung eines beliebigen numerischen Optimierungsverfahrens in der Lage, eine Objektfunktion und eine Übertragungsfunktion zu finden, welche die aus Bild 1 und 2 bestehenden Eingabedaten reproduzieren, dann ist die gefundene Lösung auch eindeutig.

Dieses Verfahren ist eine logische Verallgemeinerung der vorherigen Verfahren. Alle für die vorherigen Verfahren offenbarten Maßnahmen sind daher auch auf dieses Verfahren anwendbar. Insbesondere kann auch der Vergrößerungsfaktor $\gamma$ in die Optimierung einbezogen werden. Die Optimierung kann im Realraum oder in einem Arbeitsraum stattfinden, wobei der Arbeitsraum insbesondere der Frequenzraum sein kann.

Durch Einsatz von Kompressionsmethoden ist es möglich, die Parameteranzahl für das Objekt in die Größenordnung von 100 zu bringen. In diesem Falle sind Optimierungsverfahren wie z.B. Gradientenverfahren, Simulated Annealing oder genetische Algorithmen durchaus in der Lage, zuverlässig eine Lösung zu finden.

Spezieller Beschreibungsteil

Nachfolgend wird der Gegenstand der Erfindung an Hand von Figuren erläutert, ohne dass der Gegenstand der Erfindung hierdurch beschränkt wird. Es ist gezeigt:

Figur 1: Optisches Abbildungssystem als Beispiel für ein signalverarbeitendes System.
Figur 2: Skizze des erfindungsgemäßen Verfahrens.
Figur 3: Auswahl des Ausschnitts aus der zweiten Repräsentation, so dass beide Repräsentationen sich auf den gleichen Bereich des Objekts beziehen.
Figur 4: Graphische Erläuterung zur Berechnung des Differenzenquotienten D(G).
Figur 5: Ausfiihrungsbeispiel des Verfahrens an einem Elektronenmikroskop.

Figur 1 verdeutlicht, inwiefern ein optisches System OS als Signalverarbeitungssystem anzusehen ist. Das System umfasst ein Transfersystem T und einen Detektor D. Das Transfersystem T projiziert das vom Objekt O ausgehende Licht auf den Detektor D, so dass dort ein scharfes Bild entsteht. Die Übertragungsfunktion des Systems ist aus einem Beitrag des Transfersystems T und einem Beitrag des Detektors D zusammengesetzt.

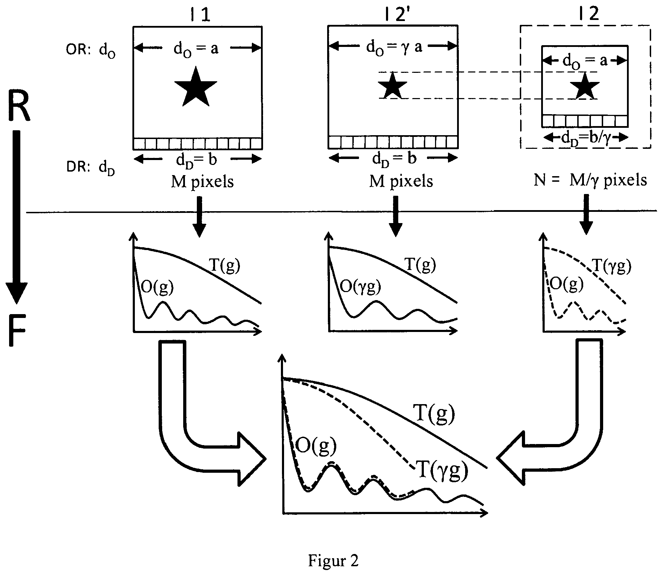

Figur 2 illustriert den Gang des erfindungsgemäßen Verfahrens. Ohne Beschränkung der Allgemeinheit wird hier von einem quadratisch bemessenen Detektor ausgegangen, wobei anders bemessene Detektoren vom Prinzip her nicht ausgeschlossen sind. Der Detektor bestehe aus MxM Pixeln und habe entlang einer Richtung die physikalische Abmessung $d_D = b$ Pixel (Detektorreferenz DR). Gegeben seien zwei mittels dieses Detektors gemachte Aufnahmen I1 und I2' als Repräsentationen desselben Objekts, die bei jeweils verschiedenen Vergrößerungen gemacht wurden. Die Aufnahme I1 sei bei einer beliebigen Vergrößerung gemacht und enthalte ein Objektgebiet der Ausdehnung $d_O = a$ Nanometer (Objektreferenz OR). Die Aufnahme I2' sei bei einer Vergrößerung gemacht, die sich im Bezug auf I1 um den Faktor $1/\gamma$ unterscheidet. Ohne Beschränkung der Allgemeinheit soll hier von $\gamma > 1$ ausgegangen werden, was im vorliegenden Fall bedeutet, dass die Vergrößerung von I2' geringer ist als die von I1. Aufgrund der geringeren Vergrößerung von I2' enthält I2' dann ein Objektgebiet, das im Vergleich zu I1 entlang einer Dimension um den Faktor $\gamma$ größer ist, d.h. I2' enthält ein Objektgebiet der Ausdehnung $d_O = \gamma a$.

Es ist nun möglich, ein Gebiet auf I2' auszuwählen, das bezüglich der Abmessung des dargestellten Objektgebiets genau den Abmessungen des auf I1 erfassten Objektgebiets entspricht.

Die Positionierung des in I2' ausgewählten Gebietes kann dann so gewählt werden, dass das gesamte I1 und der ausgewählte Bereich I2 von I2' genau dasselbe Objektgebiet wiedergeben. Die so vorgenommene Auswahl eines Bildausschnittes bei I2' entspricht einer fiktiven physikalischen Verkleinerung des Detektors von seiner tatsächlichen physikalischen Abmessung $d_D = b$ auf die Abmessung $d_D = b/\gamma$. Es ist wichtig zu erwähnen, dass diese Verkleinerung nicht durch Skalierung der Pixel, sondern durch das Weglassen von Randpixeln bei gleicher Pixelgröße erfolgt. Da ein Detektor meist aus diskreten Pixeln aufgebaut ist, ergibt sich für die so entstandene kleinere Pixelzahl N des fiktiven Detekors $N = NINT(M/\gamma)$, wobei die Funktion NINT die nächstliegende ganze Zahl bedeutet. Bei einem hinreichend großen Betrag von N, der bei gängigen Bilddetektoren typischerweise größer als 1000 ist, kann der bei beliebigem $\gamma$ durch die ganzzahlige NINT-Rundung entstandene Fehler in Bezug auf eine exakt deckungsgleiche Ausschnittswahl in der Regel vernachlässigt werden.

Im nächsten Schritt werden die Bilder vom Realraum R in den Fourierraum F transformiert, wobei das aus MxM Pixeln bestehende I1 einer diskreten MxM Fouriertransformation unterzogen wird. Das auf die Größe NxN reduzierte deckungsgleiche I2 wird einer NxN Fouriertransformation unterzogen. Die mittlere Zeile von Figur 2 enthält von links nach rechts die Spektren der Objektfunktion O(g) und der Übertragungsfunktion T(g) für die Bilder I1, I2' und I2.

Die Fouriertransformation kann mit dem FFT (Fast-Fourier-Transform) Algorithmus berechnet werden. Da insbesondere N nicht unbedingt eine Potenz von 2 ist, eignen sich jedoch viele gängige FFT Programme nicht, da diese häufig auf einer Relation $M, N = 2^n$ basieren (Radix 2 Algorithmus). Es kann jedoch stets ein sogenannter mixed-radix FFT Algorithmus herangezogen werden, der eine Zerlegung von N in allgemeine Primzahlen, die nicht notwendigerweise 2 sind, ermöglicht. Bei günstiger Zerlegbarkeit von N in viele kleine Primzahlen kann der mixed-radix Algorithmus eine Recheneffizienz erreichen, die sehr nahe an der des Radix-2 FFT Algorithmus liegt. Ist N im ungünstigsten Fall selbst eine Primzahl, so erniedrigt sich die Effizienz des mixed-radix Algorithmus auf die Effizienz einer direkten Fouriertransformation. Letztlich kann jedoch immer wenigstens eine direkte Fouriertransformation für beliebige Zahlen M,N verwendet werden. Bei einer typischen Größenordnung von $N \approx 10^3$ ist selbst der ungünstigste Fall einer direkten Fouriertransformation auf zeitgemäßen Computern kein Problem mehr. Bei Größenordnungen von $N \approx 10^4$ könnte man durch eine zusätzliche künstliche Erhöhung oder Erniedrigung von N um typischerweise $\pm$ 1 die Primzahlzerlegbarkeit verbessern und die Rechengeschwindigkeit dadurch erhöhen, wobei der durch die künstliche Rundung eintretende Skalierungsfehler von etwa $10^{-4}$ bei den meisten praktischen Anwendungen ebenfalls vernachlässigbar ist.

Zum besseren Verständnis des Verfahrens werden im Folgenden anhand von Figur 2 zwei Szenarien verglichen, wobei das erste Szenario keine Gebietsauswahl bei I2' vorsieht, während beim zweiten Szenario die eben erläuterte Gebietsauswahl vorgenommen wird.

Hätte man das gesamte I2' mit seiner Objektausdehnung $d_O = \gamma a$ und seiner ursprünglichen Detektorausdehnung $d_D = b$ ohne weiteres Zutun ebenso wie I1 einer diskreten MxM Fouriertransformation unterworfen, so würden die zu den I1 und I2' gehörigen Objektspektren voneinander abweichen, zum einen weil sie verschieden skaliert sind, zum anderen weil die Objektgebiete, die zur jeweiligen Transformierten beitragen, nicht identisch sind. Im Gegensatz zum Objektspektrum wäre jedoch die allein durch den Detektor gegebene Übertragungsfunktion für beide Bilder identisch, da diese nicht vom Bildinhalt, sondern nur von dem in beiden Fällen auf identische Weise genutzten Detektor abhängt (siehe mittlere Spalte von Figur 2).

Umgekehrt verhält es sich mit dem Vergleich der Fouriertransformierten von I1 und I2 nach der Reduktion von I2' auf die Objektausdehnung $d_O = a$ mit der zugehörigen fiktiven Detektorausdehnung $d_D = b/\gamma$ und der zugehörigen Pixelanzahl N. Nun kommen trotz der ursprünglich verschieden gewählten Vergrößerung wieder identische Objektfrequenzen auf identischen Frequenzen der Fouriertransformierten zu liegen, während die zugehörige Koeffizienten der Übertragungsfunktion jetzt nicht mehr auf identischen Frequenzen liegen. Das Objektspektrum und das Spektrum der Übertragungsfunktion haben also in den beiden besprochenen Szenarien bezüglich ihrer gegenseitigen Passung jeweils die Rolle vertauscht (siehe rechte Spalte von Figur 2).

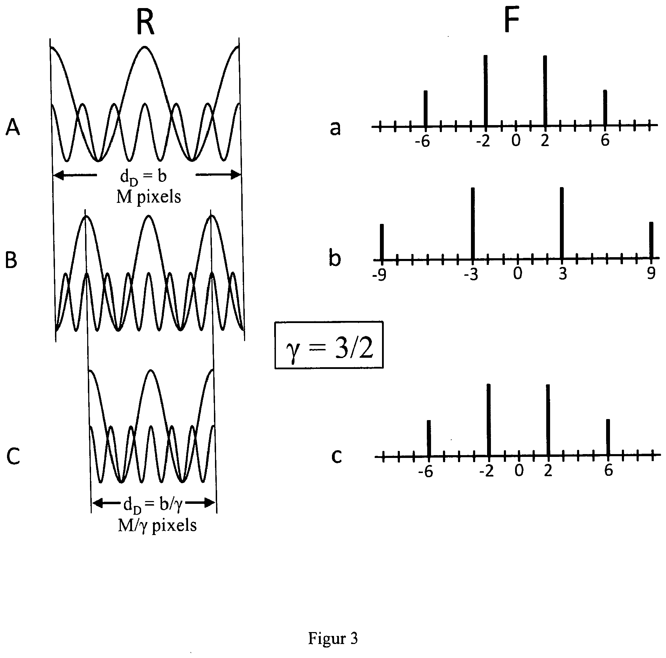

Figur 3 verdeutlich das Prinzip der Passung von Objektspektren aus verschieden vergrößerten Aufnahmen des gleichen Objekts mittels einer diskreten Fouriertransformation ist für ein diskretes Objektspektrum, das aus nur zwei Kosinuswellen verschiedener Frequenz besteht, im Detail. Hierbei wurde der Übersichtlichkeit halber auf die Darstellung einer Übertragungsfunktion verzichtet. Die linke Spalte von Figur 3 enthält Darstellungen im Realraum R, die rechte Spalte von Figur 3 enthält Darstellungen im Fourierraum F. Die in Figur 3 auf der rechten Seite zur Indizierung der Frequenzachse benutzten Zahlen bedeuten die Anzahl der Perioden pro Bildausschnitt.

Eine Kosinuswelle, die im Realraum beispielsweise n Perioden innerhalb eines Bildausschnitts von $d_D = b$ aufweist, lässt sich in zwei ebene Wellen der Form $\mathrm{Exp}[2\pi i\, n/b\, x]$ und $\mathrm{Exp}[-2\pi i\, n/b\, x]$ zerlegen. Teilbild A von Figur 3 zeigt eine solche Überlagerung zweier Kosinuswellen im Realraum, die auf dem Detektor M Pixel belegt. Nach der Fouriertransformation (Teilbild a von Figur 3) entstehen für jede Kosinuswelle zu den diskreten Frequenzen n/b und -n/b Fourierkoeffizienten, die jeweils über der Anzahl n der im Bild enthaltenen Perioden dargestellt sind. Das Fourierspektrum weist für zwei Kosinuswellen also vier von Null verschiedene Fourierkoeffizienten auf.

Teilbild B von Figur 3 zeigt die gleiche Überlagerung der beiden Kosinuswellen, die ebenfalls einen Ausschnitt von $d_D = b$ enthält, der auf dem Detektor M Pixel breit ist. Die Überlagerung wurde hier jedoch bei einer anderen Vergrößerung mit $\gamma = 3/2$ aufgenommen. In der Fouriertransformation (Teilbild b von Figur 3) verschieben sich dementsprechend die Fourierkoeffizienten gegenüber Teilbild a zu anderen Frequenzen.

Wird aus Teilbild B von Figur 3 nun der in Teilbild C gezeigte Ausschnitt von $d_D = b/\gamma$ ausgewählt, der $M/\gamma$ Pixeln auf dem Detektor entspricht, dann enthält dieser Ausschnitt für beide Kosinuswellen die gleiche Anzahl Perioden wie der in Teilbild A gezeigte Ausschnitt. Durch diese identische Gebietswahl wird also erreicht, dass abgesehen von der gewählten Abtastrate exakt identische Szenarien vorliegen. Dementsprechend enthält das in Teilbild c gezeigte Fourierspektrum für die gleichen Frequenzen Beiträge wie das in Teilbild a gezeigte, aus Teilbild A erzeugte Fourierspektrum. Die Möglichkeit, eine wechselseitige Passung der Objektfrequenzen bei gleichzeitiger wechselseitiger Identität der Fourierkoeffizienten herstellen zu können, beruht auf der Tatsache dass das Ergebnis einer Fouriertransformation bei hinreichend großer Anzahl der Stützpunkte M, N unabhängig von der Anzahl der Stützpunkte und somit unabhängig von der gewählten Abtastrate ist. Dadurch können sowohl die Objektfrequenzen der beiden Bilder als auch die zu den jeweiligen Objektfrequenzen gehörigen Fourierkoeffizienten des Objektspektrums zur Passung gebracht werden.

Die hier beschriebene Passung der Objektspektren zweier unterschiedlich vergrößerter Aufnahmen über die Fouriertransformation in unterschiedlichen Dimensionen M und N könnte alternativ auch auf andere Art erreicht werden: Wenn man in Figur 2 das aus I2' ausgewählte Untergebiet I2 der Ausdehnung $d_O=a$ und der Pixelzahl NxN mittels eines Interpolationsverfahrens im Realraum auf die Pixelzahl MxM von I1 bringt, kann man danach bei I2 eine diskrete Fouriertransformation der Dimension MxM vornehmen, um die Passung der Objektfrequenzen zwischen I1 und I2 herzustellen. Allerdings bringt diese Methode mit sich, dass jede Interpolation wiederum eine Übertragungsfunktion besitzt, die zusätzlich charakterisiert werden müsste, da I2 dann mit dieser Übertragungsfunktion behaftet ist, während I1 frei von dieser zusätzlichen Übertragungsfunktion ist. Eine Steigerung der polynomialen Ordnung der Interpolation verringert den Fehler der Interpolation, welcher dann bei der höchstmöglichen Ordnung N dann minimal würde. Jedoch entspricht der vorhin aufgezeigte Weg mittels der direkten Fouriertransformation der Dimension $N \times N$ genau dieser alternativen Realrauminterpolation der Ordnung N. Aufgrund der deutlich höheren Recheneffizienz und der absolut symmetrischen Behandlung der beiden Bilder, die es nicht notwendig macht, ein Bild zu interpolieren, während man das andere Bild unbehandelt lässt, ist der vorhin beschriebene Weg der direkten Fouriertransformation mit verschiedenen Dimensionen M und N jedoch eindeutig vorzuziehen.

Unabhängig von der Art der Bildprozessierung ist die Tatsache, dass nach dem Erreichen einer Passung der Objektfrequenzen die jeweils höchste darstellbare Objektfrequenz der Bilder I1 und I2 unterschiedlich ist. Bei der hier gewählten Darstellung, bei der ohne Beschränkung der Allgemeinheit I2 eine geringere Vergrößerung aufweist, ist auch die höchste nutzbare Objektfrequenz (Nyquistfrequenz) bei I2 niedriger als bei I1. Dies liegt daran, dass man bei der niedrigeren Abtastrate des Objektes, wie sie beim geringer vergrößerten I2 vorliegt, entsprechend weniger feine Objektdetails auflösen kann. Wie man aus Figur 2 leicht erkennen kann, besteht zwischen der Nyquistfrequenz $g^N_2$ des frequenzgepassten zweiten Bildes und der Nyquistfrequenz $g^N_1$ des ersten Bildes die Beziehung: $g^N_2 = 1/\gamma \, g^N_1$.

Stellt man ein zweidimensionales Bild in Polarkoordinaten dar, so betrifft die vorhin beschriebene Passung der Objektfrequenzen nur die radiale Koordinate g, während die azimuthale Koordinate $\varphi$ davon unberührt bleibt. Weiterhin setzt der in der Beschreibung zum Hauptanspruch aufgeführte Beweis, dass es eine eindeutige Lösung für die Übertragungsfunktion T($\mathbf{g}$) gibt, keine Abhängigkeiten zwischen verschiedenen Azimuthwinkeln voraus und erzeugt diese auch nicht. Daher kann jede azimuthale Richtung $\varphi$ eines Spektrums für sich gesondert behandelt werden. Obwohl hier zweidimensionale Bilder behandelt werden, genügt es, eine einzige exemplarische Raumrichtung $\varphi$ zu behandeln. Der vorgenannte Beweis gilt also bei voller Aufrechterhaltung der Zweidimensionalität für jede beliebige Raumrichtung $\varphi$ einzeln.

In Figur 4a ist beispielhaft eine Quotientenkurve Q(g) dargestellt, die sich bis zur Grenzfrequenz $1/\gamma \, g_N$ bilden lässt, wobei $g_N$ die Nyquistfrequenz des ersten Bildes ist, und $\gamma > 1$ vorausgesetzt wurde. Es sind beispielhaft drei Stützstellen $g_A$, $g_B$ und $g_C$ eingezeichnet. Figur 4b zeigt beispielhaft die noch zu erzielende Dekomposition der dargestellten Quotientenkurve Q(g) in Zähler T($\gamma$g) und Nenner T(g). In Figur 4b ist ersichtlich, wie durch die Quotientenbildung stets jeweils zwei Punkte g und $\gamma$g auf ein und derselben Kurve T(g) in eine paarweise Relation gesetzt werden: Zwischen den Punkten $g_A$ und $\gamma g_A$ fällt die Kurve von T(g) gerade bis auf den Wert ab, den die Kurve T($\gamma$g) an der Stelle $g_A$ annimmt.

Diese Relation bleibt erhalten, wenn beide Kurven logarithmiert werden (Figur 4c). Die Differenz zwischen den beiden Kurven ln[T(g)] und ln[T($\gamma$g)] ist nun genau der Logarithmus der gegebenen Quotientenkurve Q(g). Das bedeutet, dass der Ordinatenabschnitt des Differenzenquotienten für ln[T(g)] bekannt ist. Somit steht für alle Frequenzen bis $g_N(1+1/\gamma)/2$ der Differenzenquotient $\Delta$ln[T(G)]/$\Delta$G zur Verfügung (Figur 4d). Damit aber kann T(G) eindeutig durch Integration bestimmt werden.

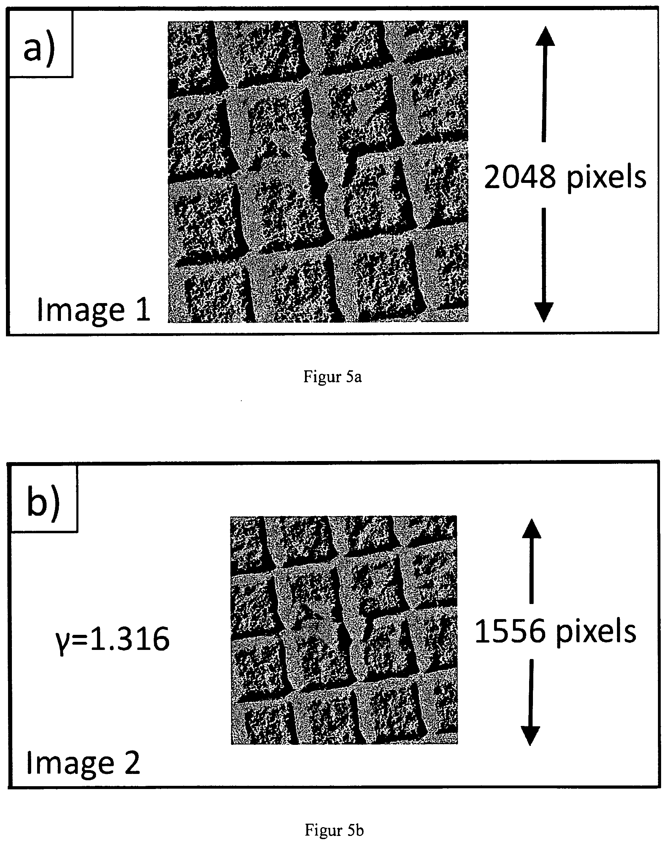

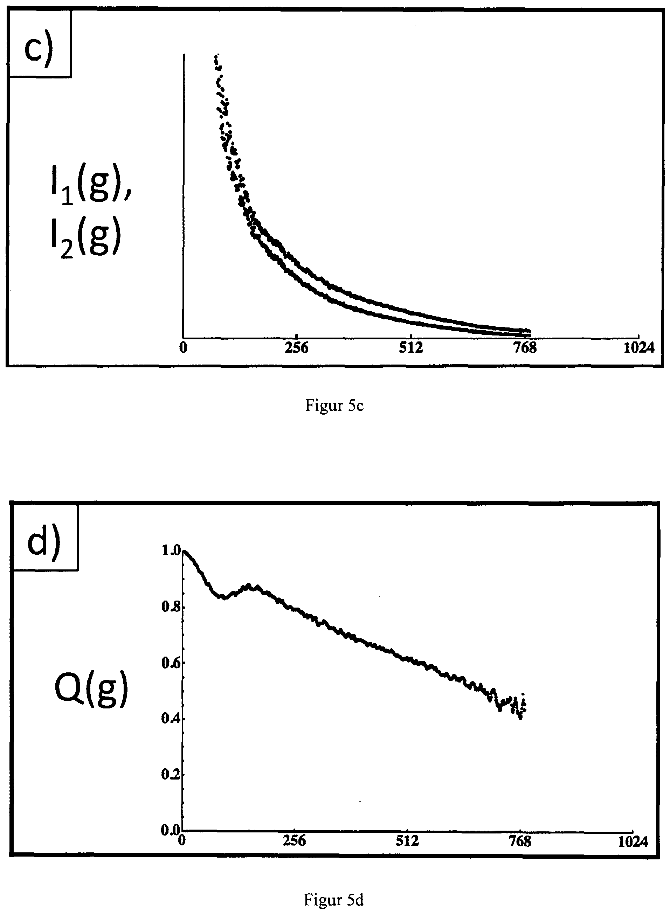

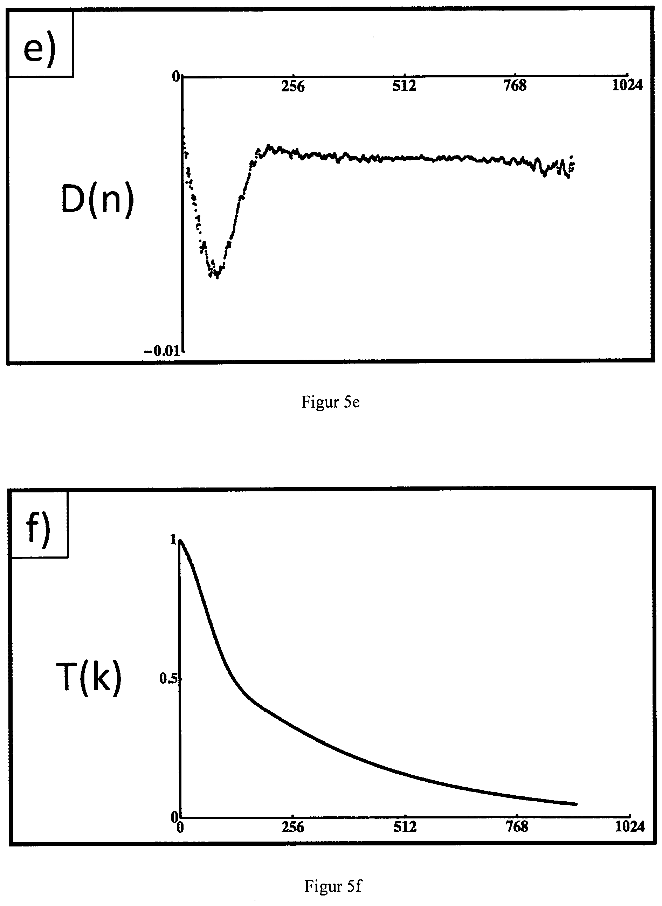

Figur 5 zeigt ein Ausführungsbeispiel des erfindungsgemäßen Verfahrens zur Bestimmung der Übertragungsfunktion der CCD Kamera eines Transmissionselektronenmikroskops. In Figur 5a ist die elektronenmikroskopische Aufnahme einer handelsüblichen Testprobe zu sehen, die aus einem dünnen, auf einem Kupfernetz liegenden Kohlenstofffilm besteht. Die nominale Vergrößerung dieser als Bild 1 ("Image 1") bezeichneten Aufnahme beträgt 13000. Die zur Aufnahme benutzte CCD Kamera besteht aus 2048 x 2048 Pixeln der Größe 15 Mikrometer. In Figur 5b ist ein Ausschnitt einer zweiten Aufnahme ("Image 2") zu sehen, die vom selben Objektgebiet mit 10000-facher Nominalvergrößerung gemacht wurde. Dieser zu Bild 1 deckungsgleiche Ausschnitt besteht aus 1556 x 1556 Pixeln und wird als Bild 2 bezeichnet. Das genaue Vergrößerungsverhältnis zwischen den Bildern 1 und 2 beträgt $\gamma=1.316$. Das zweidimensionale Frequenzspektrum von Bild 1 wurde mittels des Algorithmus der schnellen Fouriertransformation (Fast Fourier Transform, FFT) auf 2048 x 2048 Pixeln ermittelt, das entsprechende Frequenzspektrum des Bildes 2 mittels einer mixed-radix FFT auf 1556 x 1556 Pixeln. Anschließend wurden die beiden zweidimensionalen Spektren zur Rauschminderung nach Gl. (4) azimuthal gemittelt. Zur weiteren Rauschminderung wurden für Bild 1 und für Bild 2 jeweils vier solcher unabhängig gewonnener Spektren aus jeweils vier Aufnahmen gemittelt. Die so erhaltenen eindimensionalen Spektren wurden anschließend gemäß Gl. (6) bezüglich einer Rauschkonstante korrigiert. Dieser Schritt ist notwendig, da ein geringer additiver Sockelbetrag der Intensitätsspektren, der auf Rauschen zurückzuführen ist, bei hohen Raumfrequenzen dominant werden kann. Da dieser Sockelbetrag weder vom Objekt noch von der Übertragungsfunktion abhängt, lässt er sich auch nicht nach Gl. (2) behandeln und würde das Ergebnis bei hohen Raumfrequenzen systematisch verfälschen. Die um den Sockelbetrag reduzierten Intensitätsspektren $I_1(g)$ und $I_2(g)$ sind in Figur 5c dargestellt. Die in Figur 5 gewählte diskrete Indizierung der Frequenzachse entspricht der in Figur 3 gewählten Darstellung, wobei die Frequenz n=1024 die Nyquistfrequenz des aus 2048 x 2048 Pixeln bestehenden Bildes 1 bezeichnet.

In Figur 5d ist die nach Gl. (3) aus den beiden Intensitätskurven $I_1(g)$ und $I_2(g)$ gebildete Quotientenkurve Q(g) dargestellt. Aus der Quotientenkurve Q(g) wird danach unter Zuhilfenahme der Gln. (4)-(7) der Differenzenquotient D(G) gebildet. Die mittels der Interpolation nach Gl. (11) gewonnene Darstellung des Differenzenquotienten $D_n = D(n)$, welche die ursprünglichen Metrik des Bildes 1 wieder herstellt, ist in Figur 5e dargestellt. Bei dieser Darstellung gehört ein mit dem Index n versehener Differenzenquotient $D_n = D(n)$ exakt zu einer mit dem Index n versehenen Frequenz des Bildes 1. Die gesuchte Übertragungsfunktion T(k) der CCD Kamera, die sich durch die Summation nach Gl. (12) und die anschließende Exponentiation nach Gl. (13) ergibt, ist in Figur 5f dargestellt. Die offensichtlich glatte Kurvenform der erhaltenen Übertragungsfunktion T(k) ist nicht - wie man vielleicht meinen könnte - durch einen zusätzlichen Glättungsschritt an dieser Stelle entstanden, sondern ist ein intrinsischer glättender Effekt der Summation nach Gl. (12), bzw. der dazu analogen allgemeineren Integration nach Gl. (9).

## Patentansprüche

1.  Verfahren zur Bestimmung der Übertragungsfunktion eines signalverarbeitenden Systems aus mindestens zwei Repräsentationen $I_1(\mathbf{x})$ und $I_2(\mathbf{x})$ eines Objekts, die das System aus unterschiedlich skalierten vom Objekt herrührenden Eingangssignalen erzeugt hat, oder aus einer Repräsentation $I_1(\mathbf{x})$ eines ersten Objekts und aus einer Repräsentation $I_2(\mathbf{x})$ eines hierzu bis auf einen Skalenfaktor geometrisch identischen Objekts, wobei das Objekt durch seine Anwesenheit eine physikalische Messgröße orts- und/oder zeitabhängig verändert und hierdurch das Eingangssignal erzeugt, wobei das Verfahren die Übertragungsfunktion ohne Kenntnis eines nominellen Eingangssignals bestimmt indem

    • die beiden Repräsentationen in einen Arbeitsraum transformiert werden, in dem sie jeweils als Produkt der Übertragungsfunktion mit dem unbekannten Eingangssignal darstellbar sind;

    • Ausschnitte der beiden Repräsentationen $I_1(\mathbf{x})$ und $I_2(\mathbf{x})$, die sich auf den gleichen Bereich bzw. gleichwertige Bereiche des Objekts bzw. der Objekte beziehen und somit auf das gleiche unbekannte Eingangssignal zurückgehen, ausgewählt werden;
    • diese Ausschnitte im Arbeitsraum als Funktionen $I_1(\mathbf{g})$ und $I_2(\mathbf{g})$ ausgedrückt werden;
    • der Quotient $Q(\mathbf{g})=I_2(\mathbf{g})/I_1(\mathbf{g})$ aus diesen beiden Funktionen gebildet wird, so dass das unbekannte Eingangssignal unterdrückt wird sowie Zähler und Nenner jeweils die gesuchte Übertragungsfunktion mit unterschiedlich skalierten Argumenten enthalten;
    • aus dem Verlauf des Quotienten der gesuchte Verlauf der Übertragungsfunktion ausgewertet wird,

    **dadurch gekennzeichnet, dass**
    die Ausschnitte der beiden Repräsentationen ausgewählt werden, indem ein Ähnlichkeitsmaß optimiert wird, wobei Position und Ausdehnung des Ausschnitts aus der zweiten Repräsentation die freien Parameter der Optimierung sind.

2.  Verfahren nach Anspruch 1, **dadurch gekennzeichnet, dass** die beiden Repräsentationen in den Frequenzraum als Arbeitsraum transformiert, insbesondere fouriertransformiert, werden.

3.  Verfahren nach einem der Ansprüche 1 bis 2, **dadurch gekennzeichnet, dass** aus dem kontinuierlich bzw. an diskreten Stützstellen erklärten Logarithmus von Q(g) ein kontinuierlich bzw. an diskreten Stützstellen erklärter Differenzenquotient für den Logarithmus von T($\mathbf{g}$) gebildet wird, wobei dieser Differenzenquotient insbesondere integriert bzw. summiert werden kann.

4.  Verfahren nach Anspruch 3, **dadurch gekennzeichnet, dass** für die Bildung des Differenzenquotienten für eine Position $\mathbf{g}$ im Arbeitsraum aus einer Mehrzahl von mindestens drei Repräsentationen zwei Ausschnitte aus verschiedenen Repräsentationen und damit zwei Funktionen $I_1(\mathbf{g})$ und $I_2(\mathbf{g})$ ausgewählt werden, die sich um einen vorgegebenen Skalierungsfaktor $\gamma$ voneinander unterscheiden, wobei der Skalierungsfaktor $\gamma$ insbesondere zwischen 1 und 2 gewählt werden kann.

5.  Verfahren nach einem der Ansprüche 1 bis 4, **dadurch gekennzeichnet, dass** für die Übertragungsfunktion T($\mathbf{g}$)

ein parametrisierter Ansatz gemacht und mit einem Optimierungsverfahren daraufhin optimiert wird, dass aus $T(\mathbf{g})$ der Quotient $Q(\mathbf{g})$ oder ein daraus abgeleiteter Funktionsverlauf bestmöglich reproduziert wird.

6. Verfahren nach Anspruch 5, **dadurch gekennzeichnet, dass** $T(\mathbf{g})$ auf bestmögliche Übereinstimmung des Quotienten $T(p\mathbf{g})/T(\mathbf{g})$ mit dem aus $I_1(\mathbf{g})$ und $I_2(\mathbf{g})$ erhaltenen Quotienten $Q(\mathbf{g})=I_2(\mathbf{g})/I_1(\mathbf{g})$ optimiert wird, worin p ein Skalierungsfaktor ist.

7. Verfahren nach einem der Ansprüche 5 bis 6, **dadurch gekennzeichnet, dass** der vorbekannte oder bei der Anfertigung der Repräsentationen $I_1(\mathbf{x})$ und $I_2(\mathbf{x})$ eingestellte Skalierungsfaktor $\gamma$, um den sich diese Repräsentationen unterscheiden, als Skalierungsfaktor p gewählt wird.

8. Verfahren nach einem der Ansprüche 5 bis 7, **dadurch gekennzeichnet, dass** der Wert von p im Rahmen eines Optimierungsverfahrens bestimmt wird.

9. Verfahren nach einem der Ansprüche 1 bis 8, **dadurch gekennzeichnet, dass** vor der Transformation in den Arbeitsraum die Repräsentation mit der geringeren Ausdehnung im Realraum auf die Ausdehnung der anderen Repräsentation hochinterpoliert wird.

10. Verfahren nach einem der Ansprüche 1 bis 9, **dadurch gekennzeichnet, dass** die Repräsentationen im Arbeitsraum in Polarkoordinaten transformiert und in dieser Darstellung azimuthal gemittelt werden.

11. Verfahren nach Anspruch 10, **dadurch gekennzeichnet, dass** aus den azimuthal gemittelten Repräsentationen jeweils ein Rauschspektrum oder ein konstanter Rauschuntergrund herauskorrigiert wird.

12. Verfahren nach einem der Ansprüche 1 bis 11, **dadurch gekennzeichnet, dass** die beiden Repräsentationen $I_1(\mathbf{x})$ und $I_2(\mathbf{x})$ mit einem in diskrete Pixel unterteilten CCD-Sensor aufgenommene Bilder sind.

13. Verfahren zur Bestimmung der Übertragungsfunktion eines signalverarbeitenden Systems mit den Schritten:

   • es werden mit dem System mindestens zwei unterschiedlich skalierte Repräsentationen $I_1(\mathbf{x})$ und $I_2(\mathbf{x})$ eines Objekts oder mindestens eine Repräsentation $I_1(\mathbf{x})$ eines ersten Objekts und eine Repräsentation $I_2(\mathbf{x})$ eines hierzu bis auf einen Skalenfaktor geometrisch identischen Objekts erzeugt;
   • mit diesen Repräsentationen wird das Verfahren nach einem der Ansprüche 1 bis 12 durchgeführt.

14. Verfahren nach Anspruch 13, **dadurch gekennzeichnet, dass** die unterschiedliche Skalierung der Repräsentationen $I_1(\mathbf{x})$ und $I_2(\mathbf{x})$ durch eine Änderung der Skalierung des vom Objekt am Eingang des Systems erzeugten Eingangssignals $O(\mathbf{x})$ eingestellt wird.

15. Verfahren nach Anspruch 14, **dadurch gekennzeichnet, dass** ein Elektronenmikroskop, insbesondere ein Transmissionselektronenmikroskop, als signalverarbeitendes System gewählt und die Vergrößerungsänderung zwischen den Repräsentationen $I_1(\mathbf{x})$ und $I_2(\mathbf{x})$ durch die Hintereinanderschaltung der Zwischenlinse und der Projektorlinse eingestellt wird.

16. Verfahren nach einem der Ansprüche 13 bis 15, **dadurch gekennzeichnet, dass** die unterschiedliche Skalierung der Repräsentationen $I_1(\mathbf{x})$ und $I_2(\mathbf{x})$ durch eine Änderung des räumlichen Abstands zwischen dem Objekt und dem signalverarbeitenden System eingestellt wird.

17. Verfahren nach einem der Ansprüche 13 bis 16, **dadurch gekennzeichnet, dass** mindestens eine der Repräsentationen $I_1(\mathbf{x})$ und $I_2(\mathbf{x})$ als Zusammenfassung von mindestens zwei Einzelrepräsentationen erzeugt wird.

18. Verfahren nach einem der Ansprüche 1 bis 17, **dadurch gekennzeichnet, dass** Rauschen als Objekt gewählt wird.

**Claims**

1. Method for determining the transfer function of a signal processing system from at least two representations $I_1(\mathbf{x})$ and $I_2(\mathbf{x})$ of an object, which the system has produced from differently scaled input signals stemming from the object, or from a representation $I_1(\mathbf{x})$ of a first object and from a representation $I_2(\mathbf{x})$ of an object that is geometrically identical to it up to a scale factor, in which through its presence the object changes a physical measured variable depending on location and/or time and through this produces the input signal, in which the method determines the transfer function without knowing a nominal input signal, in which

- both representations are transformed into a work space, in which they may be represented as a product of the transfer function with the unknown input signal;
- sections of both representations $I_1(\mathbf{x})$ and $I_2(\mathbf{x})$, which relate to the same area or equivalent areas of the object or objects and therefore go back to the same unknown input signal, are selected;
- these sections are expressed in the work space as functions $I_1(\mathbf{g})$ and $I_2(\mathbf{g})$;
- the quotient $Q(\mathbf{g})=I_2(\mathbf{g})/I_1(\mathbf{g})$ is formed from both these functions, so that the unknown input signal is suppressed and the numerators and denominators contain the transfer function sought with differently scaled arguments;
- the course of the transfer function sought is evaluated from the course of the quotient,

**characterised in that**
the sections of both representations are selected, in which a similarity measure is optimised, in which the position and extent of the section from the second representation are the free parameters of optimisation.

2. Method according to claim 1, **characterised in that** both representations are transformed, particularly Fourier transformed, into the frequency space as the work space.

3. Method according to claims 1 to 2, **characterised in that** a difference quotient for the logarithm of $T(\mathbf{g})$ that is declared continuously or at discrete supporting points is formed from the logarithm of $Q(\mathbf{g})$ that is declared continuously or at discrete supporting points, in which this difference quotient may be integrated or summed up in particular.

4. Method according to claim 3, **characterised in that** for forming the difference quotient for a position $\mathbf{g}$ in the work space two sections from different representations are selected from a plurality of at least three representations and therefore two functions $I_1(\mathbf{g})$ and $I_2(\mathbf{g})$, which differ from each other by a preset scaling factor $\gamma$, in which the scaling factor $\gamma$ may be selected particularly between 1 and 2.

5. Method according to one of claims 1 to 4, **characterised in that** for the transfer function $T(\mathbf{g})$ a parameterised approach may be made and optimised with an optimisation method, so that the quotient $Q(\mathbf{g})$ or a function course derived from it is reproduced as well as possible from $T(\mathbf{g})$.

6. Method according to claim 5, **characterised in that** $T(\mathbf{g})$ is optimised to the best possible agreement of the quotient $T(p\mathbf{g})/T(\mathbf{g})$ with the quotient $Q(\mathbf{g})=I_2(\mathbf{g})/I_1(\mathbf{g})$ obtained from $I_1(\mathbf{g})$ and $I_2(\mathbf{g})$, in which p is a scaling factor.

7. Method according to one of claims 5 to 6, **characterised in that** the scaling factor $\gamma$ that is previously known or set when producing the representations $I_1(\mathbf{x})$ and $I_2(\mathbf{x})$, by which these representations differ, is selected as the scaling factor p.

8. Method according to one of claims 5 to 7, **characterised in that** the value of p is determined within the scope of an optimisation method.

9. Method according to one of claims 1 to 8, **characterised in that** before transformation into the work space the representation with the smaller extent is highly interpolated in the real space to the extent of the other representation.

10. Method according to one of claims 1 to 9, **characterised in that** the representations in the work space are transformed into polar coordinates and are averaged azimuthally in this representation.

11. Method according to claim 10, **characterised in that** a smoke spectrum or a constant smoke background is corrected from the azimuthally averaged representations.

12. Method according to one of claims 1 to 11, **characterised in that** both representations $I_1(\mathbf{x})$ and $I_2(\mathbf{x})$ are pictures taken with a CCD sensor divided into discrete pixels.

13. Method for determining the transfer function of a signal processing system with the steps:

- at least two differently scaled representations $I_1(\mathbf{x})$ and $I_2(\mathbf{x})$ of an object or at least a representation $I_1(\mathbf{x})$ of

a first object and a representation $I_2(\mathbf{x})$ of an object that is geometrically identical to it up to a scale factor are produced with the system;
• the method according to one of claims 1 to 12 is carried out with these representations.

14. Method according to claim 13, **characterised in that** the different scaling of the representations $I_1(\mathbf{x})$ and $I_2(\mathbf{x})$ is set by changing the scaling of the input signal $O(\mathbf{x})$ produced by the object on entering the system.

15. Method according to claim 14, **characterised in that** an electron microscope, particularly a transmission electron microscope, is selected as the signal processing system and the change in magnification between the representations $I_1(\mathbf{x})$ and $I_2(\mathbf{x})$ is set by connecting the intermediate lens and the projector lens in series.

16. Method according to one of claims 13 to 15, **characterised in that** the different scaling of the representations $I_1(\mathbf{x})$ and $I_2(\mathbf{x})$ is set by changing the physical distance between the object and the signal processing system.

17. Method according to one of claims 13 to 16, **characterised in that** at least one of the representations $I_1(\mathbf{x})$ and $I_2(\mathbf{x})$ is produced as a combination of at least two individual representations.

18. Method according to one of claims 1 to 17, **characterised in that** noise is selected as the object.

**Revendications**

1. Procédé pour déterminer la fonction de transfert d'un système de traitement de signaux constitué d'au moins deux représentations $I_1(x)$ et $I_2(x)$ d'un objet que le système a produit à partir de signaux d'entrée d'échelle différente provenant de l'objet, ou constitué d'une représentation $I_1(x)$ d'un premier objet et d'une représentation $I_2(x)$ d'un objet qui est géométriquement identique au premier à un facteur d'échelle près, l'objet modifiant par sa présence une grandeur de mesure physique dépendant de l'espace et/ou du temps et produisant ainsi le signal d'entrée, le procédé déterminant la fonction de transfert sans connaissance d'un signal d'entrée nominal en

   • transformant les deux représentations en une zone de travail dans laquelle elles peuvent être représentées respectivement comme le produit de la fonction de transfert par le signal d'entrée inconnu ;

   • sélectionnant des parties des deux représentations $I_1(x)$ et $I_2(x)$ qui se rapportent à la même région ou à des régions de mêmes valeurs de l'objet ou des objets et renvoient donc au même signal d'entrée inconnu ;
   • extrayant ces parties dans la zone de travail comme fonctions $I_1(g)$ et $I_2(g)$ ;
   • formant le quotient $Q(g)=I_2(g)/I_1(g)$ de ces deux fonctions, si bien que le signal d'entrée inconnu est supprimé et que le numérateur et le dénominateur contiennent respectivement la fonction de transfert recherchée avec des arguments d'échelle différente ;
   • évaluant à partir de la variation du quotient la variation recherchée de la fonction de transfert,

   **caractérisé en ce que**
   on sélectionne les parties des deux représentations en optimisant une grandeur de similitude, la position et l'étendue de la partie de la deuxième représentation étant les paramètres libres de l'optimisation.

2. Procédé suivant la revendication 1, **caractérisé en ce que** l'on transforme les deux représentations en la zone de fréquence comme zone de travail, notamment par transformation de Fourier.

3. Procédé suivant l'une des revendications 1 à 2, **caractérisé en ce que** l'on forme à partir du logarithme de $Q(g)$ expliqué de manière continue ou en des points de repère discrets un quotient de différence, expliqué de manière continue ou en des points de repère discrets, pour le logarithme $T(g)$, ce quotient de différence pouvant être notamment intégré ou sommé.

4. Procédé suivant la revendication 3, **caractérisé en ce que**, pour la formation du quotient de différence, on sélectionne pour une position g dans la zone de travail, à partir d'une multiplicité d'au moins trois représentations, deux parties de deux représentations différentes et ainsi deux fonctions $I_1(g)$ et $I_2(g)$ qui se différencient l'une de l'autre d'un facteur $\gamma$ d'échelle prescrit, le facteur $\gamma$ d'échelle étant sélectionné notamment entre 1 et 2.

5. Procédé suivant l'une des revendications 1 à 4, **caractérisé en ce que** l'on fait une équation paramétrisée pour la fonction T(g) de transfert et on optimise ensuite par un procédé d'optimisation de manière qu'à partir de T(g) le quotient Q(g) ou une variation de fonction qui en est déduite est reproduite de la meilleure façon possible.

6. Procédé suivant la revendication 5, caractérisé en ce l'on optimise T(g) sur une meilleure coïncidence possible du quotient T(pg)/T(g) avec le quotient $Q(g)=I_2(g)/I_1(g)$ obtenu à partir de $I_1(g)$ et $I_2(g)$, p étant un facteur d'échelle.

7. Procédé suivant l'une des revendications 5 à 6, **caractérisé en ce que** l'on choisit le facteur $\gamma$ d'échelle, connu ou réglé lors de la confection des représentations $I_1(x)$ et $I_2(x)$ par lequel ces représentations se distinguent, comme facteur p d'échelle.

8. Procédé suivant l'une des revendications 5 à 7, **caractérisé en ce que** l'on détermine la valeur de p dans le cadre d'un procédé d'optimisation.

9. Procédé suivant l'une des revendications 1 à 8, **caractérisé en ce que**, avant la transformation en la zone de travail, on interpole fortement la représentation ayant la plus petite étendue dans l'espace réel sur l'étendue de l'autre représentation.

10. Procédé suivant l'une des revendications 1 à 9, **caractérisé en ce que** l'on transforme les représentations dans la zone de travail en coordonnées polaires, et dans cette représentation, on fait la moyenne de manière azimutale.

11. Procédé suivant la revendication 10, **caractérisé en ce que**, à partir des représentations moyennées de manière azimutale, on corrige respectivement un spectre de bruit ou un fond de bruit constant.

12. Procédé suivant l'une des revendications 1 à 11, **caractérisé en ce que** les deux représentations $I_1(x)$ et $I_2(x)$ sont des images prises par un capteur CCD subdivisé en pixels discrets.

13. Procédé pour déterminer la fonction de transfert d'un système de traitement de signaux comportant les étapes :

   • on produit par le système au moins deux représentations $I_1(x)$ et $I_2(x)$ d'un objet d'échelles différentes ou au moins une représentation $I_1(x)$ d'un premier objet et une représentation $I_2(x)$ d'un objet géométriquement identique au premier à un facteur d'échelle près ;
   • on réalise avec ces représentations le procédé suivant l'une des revendications 1 à 12.

14. Procédé suivant la revendication 13, **caractérisé en ce que** l'on règle l'échelle différente des représentations $I_1(x)$ et $I_2(x)$ par une modification de l'échelle du signal O(x) d'entrée produit par l'objet à l'entrée du système.

15. Procédé suivant la revendication 14, **caractérisé en ce que** l'on choisit comme système de traitement de données un microscope électronique, notamment un microscope électronique à transmission, et on règle la variation d'agrandissement entre les représentations $I_1(x)$ et $I_2(x)$ en montant l'une dernière l'autre la lentille intermédiaire et la lentille de projecteur.

16. Procédé suivant l'une des revendications 13 à 15, **caractérisé en ce que** l'on règle la mise à l'échelle différente des représentations $I_1(x)$ et $I_2(x)$ par une variation de la distance spatiale entre l'objet et le système de traitement de signaux.

17. Procédé suivant l'une des revendications 13 à 16, **caractérisé en ce que** l'on produit au moins l'une des représentations $I_1(x)$ et $I_2(x)$ comme réunion d'au moins deux représentations individuelles.

18. Procédé suivant l'une des revendications 1 à 17, **caractérisé en ce que** l'on choisit comme objet des bruits.

Figur 1

Figur 2

Figur 3

Figur 4a

Figur 4b

Figur 4c

Figur 4d

Figur 5a

Figur 5b

Figur 5c

Figur 5d

Figur 5e

Figur 5f

**IN DER BESCHREIBUNG AUFGEFÜHRTE DOKUMENTE**

**In der Beschreibung aufgeführte Nicht-Patentliteratur**

- **R. R. MEYER ; A. KIRKLAND.** The effects of electron and photon scattering on signal and noise transfer properties of scintillators in CCD cameras used for electron detection. *Ultramicroscopy,* 1998, vol. 75, 23-33
- **R. R. MEYER ; A. I. KIRKLAND.** Characterisation of the Signal and Noise Transfer of CCD Cameras for Electron Detection. *Microscopy Research and Technique,* 2000, vol. 49, 269-280
- **R. R. MEYER ; A. I. KIRKLAND ; R. E. DUNIN-BORKOWSKI ; J. L. HUTCHISON.** Experimental characterisation of CCD cameras for HREM at 300 kV. *Ultramicroscopy,* 2000, vol. 85, 9-13
- **J. M. ZUO.** Electron Detection Characteristics of a Slow-Scan CCD Camera, Imaging Plates and Film, and Electron Image Restoration. *Microscopy Research and Technique,* 2000, vol. 49, 245-268
- **K. DU ; K. VON HOCHMEISTER ; F. PHILIPP.** Quantitative comparison of image contrast and pattern between experimental and simulated highresolution transmission electron micrographs. *Ultramicroscopy,* 2007, vol. 107, 281-292